# DEMANDE DE BREVET EUROPEEN

(11) **EP 3 709 185 A1**
(43) Date de publication de la demande: **16.09.2020**
(21) Numéro de dépôt: 20163208.0
(22) Date de dépôt: 14.03.2020
(51) Int. Cl.: G06F 16/00, H04L 12/715, H04L 12/701

(54) **PROCÉDÉ D'OPTIMISATION D'ÉCHANGES DE DONNÉES DANS UNE INFRASTRUCTURE D'OBJETS CONNECTÉS**

(30) Priorité: 15.03.2019 FR 1902729
(71) Demandeur: BULL SAS, 78340 Les Clayes sous Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: A.P.I. Conseil

(57) **Abrégé**

L'invention porte sur un procédé (1) d'optimisation d'échanges de données dans une infrastructure d'objets connectés comportant une pluralité de passerelles (GW1,GW2,GW3,GW4) de connexion à des sous réseaux (11,12,13,14) de transport de données pouvant présenter des normes de communication différentes, ladite infrastructure d'objets connectés comprenant au moins un objet connecté source (IoT1) et un objet connecté destinataire (IoT2)
ledit objet connecté source (IoT1) étant configuré pour accéder à au moins une passerelle de la pluralité de passerelles durant une plage horaire de connexion prédéterminée,
chacune desdites passerelles (GW1,GW2,GW3,GW4) de connexion étant apte à transmettre une liste de stockage disponible, la liste de stockage disponible comportant des données de capacité de stockage en fonction de plage horaire de disponibilité de stockage.

L'invention porte également sur un objet connecté et une passerelle de connexion pour l'optimisation d'échanges de données.

## Description

L'invention s'intéresse au domaine des objets connectés et plus particulièrement l'échange de données dans une infrastructure d'objets connectés. L'invention concerne notamment, un procédé d'optimisation d'échanges de données dans une infrastructure d'objets connectés comportant une pluralité de passerelles de connexion à des sous réseaux de transport de données pouvant présenter des normes de communication différentes. L'invention concerne en outre un système d'optimisation d'échanges de données dans une infrastructure d'objets connectés comportant une pluralité de passerelles de connexion à des sous réseaux de transport de données pouvant présenter des normes de communication différentes/

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou IoT) peut être regardé comme l'extension d'Internet à des éléments physiques.

L'internet des objets désigne l'ensemble des objets connectés à internet et correspond au domaine des Technologies de l'Information et de la Communication (ou TIC) qui est en pleine expansion. Les dispositifs électroniques concernés par ces applications sont appelés des objets connectés, en ce sens qu'ils peuvent interagir au travers d'une pluralité de sous-réseaux locaux pouvant être connectés à un réseau central à haut débit comme l'Internet. Ainsi, une définition de l'internet des objets est proposée dans l'ouvrage intitulé L'INTERNET DES OBJETS, de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Les usages des objets connectés sont très variés et peuvent aller du domaine de l'e-santé à celui de la domotique en passant par les téléphones mobiles. Les objets connectés envahissent un peu plus chaque jour notre quotidien et ils sont également impliqués dans le concept d'environnement intelligent et notamment de ville intelligente (ou « Smart City », en anglais), la surveillance (en anglais : « monitoring ») d'installations industrielles, les transports et la logistique, les voitures autonomes, l'agriculture, etc. En 2015, on comptait 4,9 milliards « objets connectés ». On parle de 25 à 150 milliards d'objets connectés en 2025. A cette croissance exponentielle, s'ajoute une très grande diversité des domaines d'applications : santé, transport, commerce, domotique...

Ce nombre et cette diversité constituent un vrai défi technique pour le transport de données de l'ensemble de ces objets connectés. En particulier, la connectivité entre eux ou à Internet de ces objets connectés peut être variable dans le temps. Dans certains cas, la connectivité peut ne pas être permanente, et évoluer suite par exemple à un problème matériel ou logiciel affectant une passerelle. Dans d'autres cas, elle peut être multiple, c'est-à-dire qu'elle peut s'effectuer simultanément par plus d'une passerelle de connexion à l'Internet, notamment avec la mise en œuvre du concept d'agrégation de liens.

Il a été proposé des procédés de communication des objets connectés dans lesquels une passerelle de connexion était configurée pour déterminer un premier chemin de communication et des premières ressources de communication entre le terminal source et le terminal destinataire (CN102685839). Il a aussi été proposé un procédé permettant l'assignation d'une passerelle selon les caractéristiques de l'objet connecté concerné (US2016/018043). Il a en outre été proposé un modèle de passerelle afin d'améliorer la connectivité des loTs passant par l'utilisation d'une architecture spécifique de passerelle basée sur un protocole / technologie de type maître/esclave et IPv6-BLE (Thomas Zachariah et al: 11 « The Internet of Things Has a Gateway Problem » ; Proceedings of the 16th International Workshop on Mobile Computing Systems and Applications, 2015-01-01, pages 27-32, ISBN: 978-1-4503-3391-7, New York, New York, USA).

Néanmoins, à ce jour, aucune solution ne permet de gérer de façon dynamique la connectivité d'un objet connecté à des sous-réseaux, éventuellement plus ou moins disponibles, en fonction de ses besoins de façon à toujours recevoir des messages provenant de l'extérieur des sous-réseaux (e.g. via l'Internet).

Ainsi, il existe un besoin pour de nouveaux procédés ou systèmes pour l'optimisation d'échanges de données dans une infrastructure comprenant des objets connectés de façon à permettre d'optimiser les échanges de données entre objets connectés pour un désengorgement des réseaux d'une part et une augmentation de la durée de vie des objets connectés, en réduisant les risques d'attaques et en diminuant la consommation en énergie d'autre part.

### [Problème technique]

L'invention a donc pour but de remédier aux inconvénients de l'art antérieur. En particulier, l'invention a pour but de proposer un procédé d'optimisation d'échanges de données dans une infrastructure d'objets connectés comportant une pluralité de passerelles de connexion à des sous réseaux de transport de données pouvant présenter des normes de communication différentes, ledit procédé permettant d'une part d'optimiser les échanges de données entre objets connectées et d'autre part une autoadaptation aux caractéristiques de message à envoyer et aux caractéristiques de connectivité des sous-réseaux.

L'invention a en outre pour but de proposer un système, une passerelle et un objet connecté capables de mettre en œuvre une optimisation des échanges de données entre objets connectés.

### [Brève description de l'invention]

A cet effet, l'invention porte sur un procédé d'optimisation d'échanges de données dans une infrastructure d'objets connectés comportant une pluralité de passerelles de connexion à des sous réseaux de transport de données pouvant présenter des normes de communication différentes, ladite infrastructure d'objets connectés comprenant au moins un objet connecté source et un objet connecté destinataire chacun étant aptes à accéder à au moins une passerelle de la pluralité de passerelles de connexion,
ledit objet connecté source étant configuré pour accéder à au moins une passerelle de la pluralité de passerelles durant une plage horaire de connexion prédéterminée,
chacune desdites passerelles de connexion étant apte à transmettre une liste de stockage disponible, la liste de stockage disponible comportant des données de capacité de stockage en fonction de plage horaire de disponibilité de stockage,
ledit procédé d'optimisation comprenant, lorsque l'objet connecté source initie une procédure de communication avec l'objet connecté destinataire :
- Une procédure de découverte, comportant la réception par l'objet connecté source pour chaque passerelle accessible d'un message d'information comportant la liste de stockage disponible ;
- Une procédure de sélection de passerelle de connexion, par l'objet connecté source, comportant la sélection d'une passerelle de réception, ladite passerelle de réception présentant des données de plage horaire de disponibilité de stockage correspondant à la plage horaire de connexion prédéterminée de l'objet connecté source ;
- Une procédure d'envoi d'un message de requête par l'objet connecté source destiné à l'objet connecté destinataire, ledit message de requête comportant un identifiant de la passerelle de réception sélectionnée ;
- Une procédure d'enregistrement du message de réponse, provenant de l'objet destinataire, par la passerelle de réception, comportant l'enregistrement du message de réponse sur un moyen de stockage ; et
- Une procédure de livraison du message de réponse, par la passerelle de réception, comportant la transmission du message de réponse à l'objet connecté source durant la plage horaire de connexion prédéterminée.

Un tel procédé permet d'adapter le routage des messages de réponse aux caractéristiques des passerelles et aux caractéristiques des objets connectés de façon à stocker le message de réponse sur un moyen de stockage jusqu'à sa transmission durant la plage horaire de connexion prédéterminée de l'objet connecté source. Ainsi, grâce à l'invention, il est possible de réaliser un routage auto adaptatif, un désengorgement des réseaux et une optimisation des coûts de transports des messages.
En outre, le procédé permet d'utiliser au mieux les différents potentiels de connectivités et de stockage des différentes passerelles ou objets connectés disponibles sur l'ensemble des différents sous réseaux mis à leur disposition. En effet, ceci permet à un objet connecté de pouvoir se connecter successivement à plusieurs sous-réseaux sans risque de perdre des messages d'une part et d'augmenter la durée de fonctionnement des objets connectés grâce à une connexion ponctuelle d'autre part. Il y a alors une diminution de la consommation, une stabilité augmentée des réseaux ainsi qu'un désengorgement desdits réseaux. Ainsi, le procédé s'inscrit dans une optimisation des échanges de données entre objets connectés tout en augmentant la durée de vie des objets connectés, en réduisant les risques d'attaques et en diminuant la consommation en énergie.
Les inventeurs proposent donc une solution permettant de répondre aux enjeux de connectivité en proposant un procédé pouvant s'adapter à la diversité des objets connectés, pouvant couvrir l'ensemble des objets connectés déployés, qu'ils soient ou non directement accessibles par un système centralisé, et pouvant optimiser les échanges tout en augmentant la stabilité des réseaux.

En particulier, une telle solution permet contrairement aux solutions de l'art antérieur de tirer avantage des caractéristiques de connectivité des passerelles et de choisir la passerelle à utiliser en fonction des plages horaires de disponibilité de stockage des différentes passerelles à la disposition de l'objet connecté et des besoins du message à transmettre (e.g. sa catégorie).
La détermination d'une plage horaire durant laquelle un objet connecté pourra accéder à au moins une passerelle de la pluralité de passerelles correspond au choix d'une passerelle et d'un créneau durant lequel il pourra accéder au message de réponse. Par exemple, lorsqu'un IoT doit échanger un message, il catégorise à la fois la requête qu'il va transmettre, mais également la réponse à sa requête. Une fois le type de message (requête et réponse) déterminé, ils utilisent les règles de priorités récupérer pour déterminer l'ordre de priorités des passerelles pour envoyer de son message et pour recevoir la réponse. Une fois ces listes constituées, il va contacter par ordre de priorités croissantes les passerelles pour la réception afin d'obtenir les créneaux disponibles pour le stockage du message de réponse. Si une passerelle ne dispose d'un créneau acceptable, l'IoT contacte alors une passerelle suivante. Dans le cas où aucune passerelle ne dispose d'un créneau acceptable pour l'IoT, l'IoT devra calculer un nouveau créneau de réception lui permettant de réceptionner directement le message réponse et donc sans de devoir recourir à un stockage sur une des passerelles.

### Selon d'autres caractéristiques optionnelles du procédé :

- la liste de stockage disponible du message d'information comporte des données de capacité de stockage en fonction de plage horaire de disponibilité de stockage sur les moyens de stockage de la passerelle et sur les moyens de stockage d'objets connectés appartenant au réseau de ladite passerelle de connexion. Ceci permet de mettre à disposition de l'objet connecté source, de façon transparente, une capacité de stockage mise à disposition par la passerelle de connexion ou par les objets connectés du réseau local de la passerelle de connexion. Ainsi, cela permet à l'objet connecté source de disposer d'une plus grande diversité de capacités de stockage en fonction de plage horaire de disponibilité. En particulier, il pourra dialoguer avec la passerelle uniquement, elle enverra un message d'information sur la capacité de stockage qu'elle expose pendant une plage horaire définie et elle se chargera de stocker en interne ou en externe (objets distants) les données.
- la procédure d'enregistrement du message de réponse comprend le stockage du message de réponse sur un moyen de stockage de la passerelle de réception ou sur un moyen de stockage d'un objet connecté appartenant au réseau de ladite passerelle de réception. Ceci permet d'augmenter la durée de vie des objets connectés, de gérer la connexion de l'objet connecté à plusieurs sous-réseaux, de diminuer la consommation d'énergie et de réduire un éventuel coût lié à la connectivité aux réseaux et/ou à son activité. En effet, l'objet connecté n'est plus connecté en continue au sous réseau. Le stockage du message de réponse sur un moyen de stockage permet d'augmenter la stabilité du réseau. Enfin, le stockage du message permet une persistance dudit message lors d'une interruption ou d'un problème de connectivité sur le réseau, cela se traduit par une communication optimisée entre objet connecté et une amélioration de la sécurité au sein des sous réseaux. En outre, comme cela sera détaillé par la suite le message peut avantageusement être chiffré par la passerelle de connexion avant son stockage en particulier sur un moyen de stockage d'un objet connecté.
- Il comprend une procédure d'attribution de niveau de priorité, à chaque passerelle de connexion de la pluralité de passerelles, ladite attribution de niveau de priorité comprenant l'exécution par l'objet connecté source d'au moins une fonction de priorisation pour calculer des niveaux de priorité pour chaque passerelle de connexion. Ceci permet de définir un niveau de priorité pour chaque passerelle. Cela permet d'optimiser l'utilisation des passerelles et de gérer de façon dynamique l'évolution de connectivité de sous-réseaux. Ceci permet un routage auto adaptatif, une optimisation des coûts de transports et une gestion de la durée de validité des messages transmis. En outre, l'utilisation d'une fonction de priorisation permet de gérer la priorisation des passerelles au niveau de l'objet connecté et donc de pouvoir facilement mettre en place un tel procédé tout en garantissant une comparabilité des niveaux de priorité.
- La procédure d'attribution de niveau de priorité comporte l'attribution, pour chaque passerelle de connexion, d'un niveau de priorité par catégorie de message. Ainsi, la priorisation des passerelles est plus adaptée aux messages à transmettre (i.e. leur caractéristiques).
- il comprend une procédure de catégorisation de messages à transmettre, comportant une catégorisation d'une requête à envoyer par l'objet connecté source de façon à définir une valeur de catégorie de la requête, la catégorisation comprenant l'exécution par l'objet connecté source d'au moins une fonction de catégorisation, pour calculer la valeur de catégorie de la requête à partir de paramètres de message de ladite requête. Ceci permet d'optimiser l'utilisation des passerelles en fonction des messages à recevoir. En outre, certains réseaux de communication seront particulièrement adaptés à une certaine catégorie de message montant alors que d'autres seront plus adaptés à une autre catégorie de message descendant. Dans le cadre de l'invention, les passerelles sont utilisées au mieux en fonction des caractéristiques des messages transmis contrairement aux procédés et systèmes antérieurs proposant un seul chemin ou routage prédéfini.
- La procédure de sélection comprend la sélection d'une passerelle de réception selon les niveaux de priorités calculés lorsque plusieurs passerelles de connexion disposent d'une plage horaire de disponibilité de stockage correspondant à la plage horaire de connexion prédéterminée de l'objet connecté source. Ceci permet une gestion de l'échange de données augmentée, le routage des données est ainsi adapté et priorisé en fonction d'une même plage horaire de disponibilité de stockage.
- la procédure de sélection comprend la sélection d'une passerelle d'envoi selon les niveaux de priorité calculés.
- l'étape de sélection comprend une étape de calcul d'une nouvelle plage horaire de connexion lorsqu'aucune plage horaire de disponibilité de stockage ne correspond à la plage horaire de connexion prédéterminée de l'objet connecté source. Cela permet une auto adaptation du routage et de la communication entre objets connectés. Ainsi, la gestion de l'échange de données est augmentée et il y a diminution de l'encombrement sur les sous-réseaux.
- la procédure d'enregistrement du message de réponse comprend une étape de chiffrement du message de réponse avant l'enregistrement du message de réponse sur un moyen de stockage d'un objet connecté n'étant pas l'objet connecté source. Ceci permet d'augmenter la sécurité dans l'échange de données et lors du stockage, particulièrement lorsque le message de réponse est important, confidentiel ou d'accessibilité limitée. En outre, ceci permet d'assurer l'intégrité du message et sa pérennité. Ainsi, le message ne pourra pas être lu par un objet connecté non source.
- l'objet connecté source prend en compte des paramètres de connectivité de chaque passerelle, la liste de stockage disponible, la catégorie de message à transmettre pour le calcul de niveau de priorité de chaque passerelle de connexion en fonction de la plage horaire de connexion prédéterminée. Ceci permet à l'objet connecté de sélectionner une passerelle proposant la meilleure qualité de service pour la catégorie de message considérée en fonction du stockage disponible sur une plage horaire prédéterminée.
- la procédure de sélection comprend une étape de classement par l'objet connecté source des passerelles de connexion par ordre de leur niveau de priorité respectif en vue de la sélection de la passerelle de réception. Ceci permet un gain de temps lors de la sélection de la passerelle. L'objet connecté détermine en fonction des paramètres de son message à envoyer la passerelle qui sera le plus adaptée. En outre, cela permet également l'optimisation de l'utilisation des passerelles.
- le procédé comprend en outre une étape de mise à jour des listes de stockages disponibles, et une étape de mise à jour des niveaux de priorités. Ainsi, l'objet connecté dispose pour chaque catégorie de niveaux de priorité à jour et n'a pas à attendre la transmission d'informations depuis les passerelles lors de l'envoi de message. Il peut donc rapidement identifier la passerelle la plus performante à un instant donné. Cela peut en outre réduire le trafic des données sur le sous réseau et permettre de n'échanger que l'essentiel des données.
- le message d'information comprend les paramètres de connectivité des passerelles, une valeur de durée de validité desdits paramètres de connectivité, la liste de stockage disponible mise à jour pour chaque passerelle de connexion accessible. Ainsi l'objet connecté peut sélectionner la passerelle proposant la meilleure qualité de service. L'utilisation de telles données, simples à extraire, facilite la mise en œuvre du procédé.

L'invention porte en outre sur **un système d'optimisation d'échanges de données** dans une infrastructure d'objets connectés comportant une pluralité de passerelles de connexion à des sous réseaux de transport de données pouvant présenter des normes de communication différentes, ladite infrastructure d'objets connectés comprenant au moins un objet connecté source et un objet connecté destinataire chacun étant aptes à accéder à au moins une passerelle de la pluralité de passerelles de connexion, ledit objet connecté source étant configuré pour accéder à au moins une passerelle de la pluralité de passerelles durant une plage horaire de connexion prédéterminée, ledit objet connecté source étant également configuré pour sélectionner une passerelle de réception présentant des données de plage horaire de disponibilité de stockage correspondant à la plage horaire de connexion prédéterminée de l'objet connecté source, ladite passerelle de réception étant configurée pour livrer un message de réponse comportant la transmission du message de réponse à l'objet connecté source durant la plage horaire de connexion prédéterminée, chacune desdites passerelles de connexion étant apte à transmettre une liste de stockage disponible, la liste de stockage disponible comportant des données de capacité de stockage en fonction de plage horaire de disponibilité de stockage accessibles à la passerelle de connexion, ledit objet connecté source étant configuré pour initier une procédure de communication avec l'objet connecté destinataire comprenant :
- un message d'information comprenant une liste de stockage disponible pour chaque passerelle accessible, et
- un message de requête destiné à l'objet connecté destinataire et à être acheminé par la passerelle de réception et comportant un identifiant de la passerelle de réception sélectionnée.

Le système selon l'invention permet d'optimiser l'utilisation des passerelles en fonction des messages à envoyer d'une part et à recevoir d'autre part. Le système permet aussi d'adapter le routage des messages à la nature des flux (montant / descendant), aux caractéristiques des passerelles et aux caractéristiques des objets connectés. Ainsi, grâce à l'invention, il est possible de réaliser un routage auto adaptatif, un désengorgement des réseaux et une optimisation des coûts de transports des messages.
En outre, le système permet d'utiliser au mieux les différents potentiels de connectivités et de stockage des différentes passerelles ou objets connectés disponibles sur l'ensemble des différents sous réseaux mis à leur disposition. En effet, les capacités de stockage permettent de stocker par exemple des messages afin qu'ils soient par la suite transmis/réceptionnés. Ceci permet à l'objet connecté de se connecter au sous réseau sur la plage horaire de connexion prédéterminée. Ceci permet d'augmenter la durée de vie des objets connectés. En effet, l'objet connecté se connecte ponctuellement au sous réseau, en fonction de la plage horaire de connexion prédéterminée. Ceci se traduit également par une diminution de la consommation. Ainsi, le système s'inscrit dans une optimisation des échanges de données entre objets connectés tout en augmentant la durée de vie des objets connectés et en diminuant la consommation en énergie.

L'invention porte en outre sur **un objet connecté** adapté pour être connecté à plusieurs sous-réseaux comprenant une pluralité de passerelle de connexion à des sous réseaux de transport de données pouvant présenter des normes de communication différentes, ledit objet connecté étant apte à communiquer avec au moins un deuxième objet connecté, ledit objet connecté étant apte à, de préférence configuré pour, mettre en œuvre un procédé d'optimisation d'échanges de données selon l'invention.
Un objet connecté selon l'invention permet d'utiliser de façon optimisée des passerelles en fonction des messages à transmettre, de l'évolution de la connectivité de sous-réseaux et des capacités de stockage. En outre, un tel objet connecté présente l'avantage de pouvoir fonctionner avec des passerelles classiques étant donné que les calculs sont réalisés au niveau de l'objet connecté sur la base de caractéristiques transmises. Ainsi, grâce à l'invention, il est possible de réaliser un routage auto adaptatif, une optimisation des coûts de transports des messages, une gestion de la durée de validité des messages transmis et une sécurité d'échanges de données augmentée. En outre, un tel objet connecté selon l'invention permet de tirer avantage de la multiplicité des passerelles vers l'Internet et de l'évolution dans le temps de leur connectivité.

L'invention concerne également **une passerelle de connexion** pour l'optimisation d'échanges de données dans une infrastructure d'objets connectés comportant une pluralité de passerelles de connexion à des sous réseaux de transport de données pouvant présenter des normes de communication différentes, ladite infrastructure d'objets connectés comprenant au moins un objet connecté source et un objet connecté destinataire chacun étant aptes à accéder à au moins une passerelle de la pluralité de passerelles de connexion, ladite passerelle de connexion étant apte à, de préférence configurée pour, mettre en œuvre un procédé selon l'invention.

L'invention porte sur **un produit programme d'ordinateur** pour l'optimisation d'échanges de données dans une infrastructure d'objets connectés, qui comprend des instructions qui, lorsque le programme est exécuté par un ordinateur, conduisent celui-ci à mettre en œuvre les étapes d'un procédé d'optimisation d'échanges de données selon l'invention.

D'autres avantages et caractéristiques de l'invention apparaitront à la lecture de la description suivante donnée à titre d'exemple illustratif et non limitatif, en référence aux Figures annexées :
La figure 1, un schéma montrant une architecture de réseaux locaux comprenant plusieurs objets connectés dont un objet connecté pouvant utiliser plusieurs réseaux locaux ;
Les figures 2A et 2B, deux diagrammes fonctionnels illustrant les échanges entre des passerelles et deux objets connectés de l'architecture de la Figure 1, dans un des modes de mise en œuvre d'un procédé selon l'invention ; et
La figure 3, un schéma montrant l'architecture d'une passerelle et d'un objet connecté selon un mode de réalisation de l'invention.

### [Description de l'invention]

Dans la suite de la description, un « **objet connecté** » est un dispositif ou système électronique connecté, de préférence sans fil, à un réseau et pouvant partager des informations avec un serveur, un ordinateur, une tablette électronique, un smartphone ou tout autre appareil électronique.

L'expression « **sous-réseau** » ou « **réseau local** » au sens de l'invention correspond par exemple à des réseaux locaux servis chacun par au moins une passerelle de connexion à un autre réseau tel qu'Internet et auxquels sont connectés des objets connectés.

L'expression « **réseau principal** » au sens de l'invention est un réseau étendu, à haut débit, utilisant un protocole de transport fiable en mode connecté, comme par exemple le protocole TCP/IP (TCP ou « Transmission Control Protocol » étant un protocole de couche 4 du modèle OSI ou « Open Systems Interconnection » selon une terminologie anglo-saxonne, sur IP qui est un protocole de la couche 3 du modèle OSI). Le protocole TCP/IP est documenté dans la RFC 7931 de l'IETF (« Internet Engineering Task Force » selon une terminologie anglo-saxonne). Il peut s'agir par exemple d'un réseau Internet.

On entend par « **passerelle** » ou « **passerelle de connexion** » au sens de l'invention, un équipement assurant la connexion entre des équipements appartenant à des réseaux différents, par exemple assurant la connexion des équipements d'un réseau local (adresses IP locales, pour « Internet Protocol » selon une terminologie anglo-saxonne) et des services internet (adresses IP publiques). De ce fait, une telle passerelle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

On entend par « **niveaux de priorité** » ou « **niveau de priorité** » un ordonnancement croissant P1 à Pn selon des caractéristiques ou paramètres tels que le type de connectivité, le coût du transport, l'indice de qualité de la connectivité et/ou le niveau de sécurité, pour calculer une valeur de priorité qui correspond au niveau de priorité de chaque passerelle. Autrement dit, si P2>P1 alors la passerelle ayant un niveau de priorité P2 sera prioritaire sur la passerelle ayant un niveau de priorité P1.

L'expression « **fonction de priorisation** » au sens de l'invention peut correspondre à un protocole ou à une série d'instructions permettant de calculer un niveau de priorité à partir de valeurs de paramètres de connectivité des passerelles et selon une fonction ou formule prédéterminée.

L'expression « **fonction de catégorisation** » au sens de l'invention peut correspondre à un protocole ou à une série d'instructions permettant de calculer une catégorie attribuable à un message à transmettre à partir de valeurs de caractéristiques de message et selon une fonction ou formule prédéterminée. En outre, le nombre et les caractéristiques des catégories peuvent être prédéterminées et enregistrées au sein d'un référentiel mémorisé au niveau de l'objet connecté.

Au sens de l'invention « **message** » correspond à un message envoyé entre des objets connectés au travers d'au moins une passerelle ou entre objet connecté et passerelle ou encore entre passerelles et comprenant des données pouvant inclure des informations relatives à leur état et à celui de leur environnement. Le format de ces données peut par exemple correspondre à des fichiers, à des flux média (vidéo, son) ou encore à des valeurs codées.

Au sens de l'invention « **message d'interrogation** » correspond à un message de type BCM (« Broadcast Message » selon une terminologie anglosaxonne) diffusé par un objet connecté à destination des passerelles et/ou des autres objets connectés du réseau local.

Au sens de l'invention « **message d'information** » correspond à un message envoyé par une ou plusieurs passerelles en réponse à un message d'interrogation et qui comporte un identifiant ainsi que des paramètres de connectivité des passerelles et une valeur de durée de validité desdits paramètres de connectivité ainsi que la liste de stockage disponible.

Au sens de l'invention « **requête** » ou « **message de requête** » correspond à un message envoyé entre deux objets connectés au travers d'au moins une passerelle et comprenant des données d'un objet connecté. Un message de requête peut comporter en outre un identifiant de la passerelle de réception sélectionnée, des paramètres de messages et éventuellement une plage horaire pour la transmission d'un message de réponse.

Au sens de l'invention « **message de réponse** » correspond à un message envoyé par un objet connecté, de préférence destinataire, à destination d'un autre objet connecté, de préférence source en réponse à une requête ou un message de requête émis par l'objet connecté source. Un message de réponse peut être stocké ou enregistré sur un moyen de stockage.

Au sens de l'invention « **plage horaire** », qu'elle soit de connexion prédéterminée ou de disponibilité, correspond à une période de temps, pouvant être définie en secondes, minutes, heures ou date et comprenant un indicateur de début et de fin ou un indicateur de début ou de fin accompagné d'une durée.

Au sens de l'invention « **liste de stockage** » correspond à une pluralité de donnée permettant d'indiquer sur des plages horaires une information spécifique notamment en lien avec une capacité de stockage, par exemple la quantité de mémoire mise à disposition.

On entend par « **capacité de stockage** », au sens de l'invention un ensemble de paramètre pouvant correspondre à un espace mémoire libre (octet) mais également à un temps de rétention (temps de stockage), un temps d'accès, un débit, une sécurité des données, et/ou une persistance de rétention en cas de problème.

On entend par « **stockage** » l'enregistrement ou le maintien dans le temps d'un message ou de données sur un moyen de mémorisation, un moyen de stockage ou un moyen d'enregistrement.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. En particulier, des opérations de calcul sont effectuées par le processeur du dispositif, les données produites sont inscrites dans un champ correspondant dans une mémoire de données et ce ou ces champs peuvent être restitués à un utilisateur par exemple au travers d'une Interface Homme Machine adaptée, tels qu'à titre d'exemples non limitatifs un écran d'un objet connecté, mettant en forme de telles données. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en œuvre l'invention.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans les revendications, le terme **"comprendre"** ou **"comporter"** n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec d'autres dispositifs. En outre, il existe de plus en plus d'objets connectés présentant une pluralité de fonctionnalités où chacune desdites fonctionnalités n'aura pas les mêmes besoins matériels et notamment de connectivités. Ainsi, un appareil de communication mobile tel qu'un téléphone portable peut être utilisé pour établir des communications par la voix, des téléchargements de vidéo en streaming, des envois de fichiers de quelques kilooctets ou à l'inverse très volumineux. En outre, pour cela l'appareil de communication mobile aura à sa disposition plusieurs réseaux de communication fonctionnant selon différents protocoles : WIFI, LTE, UMTS... Or aujourd'hui, il n'existe pas de solution permettant de gérer, de façon dynamique, l'utilisation de sous-réseaux par un objet connecté de façon à permettre une connectivité optimisée de l'objet connecté en fonction de ses besoins et en particulier de gérer sa connexion à ses sous-réseaux sans risque de perdre des messages.

Ainsi, les inventeurs ont développé un nouveau procédé 1 d'optimisation d'échanges de données dans une infrastructure d'objets connectés comportant une pluralité de passerelles de connexion à des sous réseaux de transport de données pouvant présenter des normes de communication différentes.

En particulier, les inventeurs ont développé un procédé d'optimisation d'échanges de données en fonction de plages horaires de connexion prédéterminées d'un objet connecté aux passerelles d'une part, et des capacités de stockage et des plages horaires de disponibilité desdites passerelles de connexion d'autre part. Par exemple, un message sera envoyé via une première passerelle alors que la réponse sera réceptionnée par une seconde passerelle, le message de réponse pouvant alors être stocké afin qu'il soit réceptionné ultérieurement par l'objet connecté. Ainsi, il est possible de profiter des caractéristiques de connectivité des passerelles et choisir la passerelle à utiliser en fonction des plages horaires de disponibilité de stockage des différentes passerelles à la disposition de l'objet connecté et des besoins du message à transmettre (e.g. sa catégorie).

L'invention va être décrite dans le contexte d'une pluralité de sous-réseaux reliés à un réseau principal. L'invention ne se limite pas, toutefois, à cet exemple, et peut trouver des applications dans toute configuration dans laquelle il y a plusieurs sous-réseaux disponibles pour un même objet connecté IoT1.

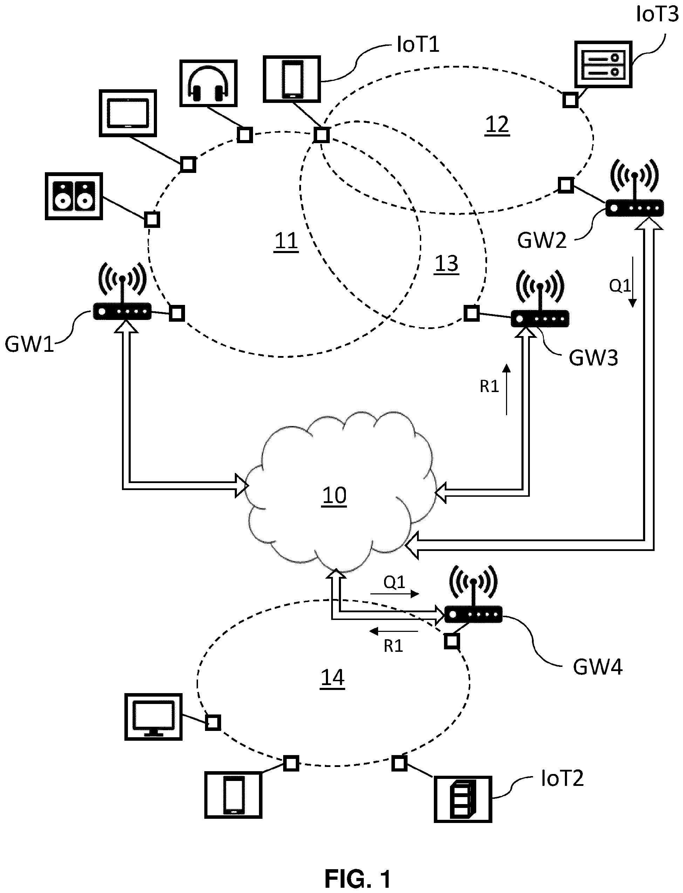

En référence au schéma de **la** **figure 1****,** une architecture de réseaux locaux à laquelle un procédé conforme à l'invention peut avantageusement s'appliquer comprend plusieurs sous-réseaux tels que par exemple un premier sous-réseau 11, un deuxième sous réseau 12 et un troisième sous réseau 13 distincts auxquels est connecté un objet connecté IoT1, ces sous-réseaux étant connectés chacun au réseau principal 10. Le réseau principal 10 dans l'exemple représenté, est le réseau Internet. Le réseau principal 10 étant lui-même connecté à un sous réseau 14.

Dans l'exemple représenté, le sous-réseau 11 comprend au moins une passerelle de connexion, comme la passerelle GW1 de connexion à Internet. De même, les sous-réseaux 12,13,14 comprennent chacun au moins une passerelle de connexion comme les passerelles de connexion GW2, GW3, et GW4 de l'exemple représenté. En particulier, dans l'exemple représenté et décrit par la suite, la passerelle GW3 permet d'accéder à un réseau de type LTE tandis que la passerelle GW2 est un accès satellite.

Chacun des réseaux locaux 11, 12, 13 et 14, comprend un ou plusieurs objets connectés. Ces objets connectés peuvent être, de manière non-limitative : un téléphone portable connecté, une tablette connectée, un ordinateur portable connecté, des enceintes connectées, un casque audio connecté, une caméra connectée, un serveur, un capteur, une installation solaire, une station météo, etc. L'invention n'entend pas être limitée, ni par le nombre ni par la nature des objets ainsi connectés aux sous-réseaux 11, 12, 13 et 14. Il peut s'agir de tout objet physique, lieu ou personne identifiés par des puces RFID, par exemple, ou un code-barre, un code EAN (« European Article Numbering » selon une terminologie anglo-saxonne), un code EPC (« Electronic Product Code » selon une terminologie anglo-saxonne), etc. Chaque objet est identifié par un code individuel unique qui le distingue de tous les autres au sein du réseau local concerné. Dans l'exemple représenté et exposé par la suite, l'objet connecté IoT1 est un dispositif de surveillance et de contrôle d'accès et l'objet connecté IoT2 est un serveur sécurisé relié au réseau local 14. Cet objet connecté IoT1 est notamment configuré pour accéder à plusieurs passerelles GW1,GW2,GW3 qui sont adaptées, comme la passerelle GW2, à la transmission d'une requête Q1 envoyée par l'objet connecté IoT1 et, comme la passerelle GW1, à la transmission d'une réponse R1 à la requête Q1.

On notera que l'identification des objets suit une tendance lourde, dans le contexte de l'émergence de l'IdO, vers l'attribution d'une adresse IP unique propre à chaque objet connecté. C'est pourquoi, dans ce qui suit, on considèrera en tant que de besoin que l'identifiant unique de chaque objet connecté de chaque sous-réseau est une adresse IP. Ceci n'est toutefois pas un prérequis des modes de mise en œuvre d'un procédé conforme à l'invention. En effet, l'interface entre les objets connectés des réseaux locaux et d'autres sous réseaux ou le réseau Internet, dont les connexions sont des connexions IP, est assurée par les passerelles GW1, GW2, GW3 et GW4 montrées à la figure 1, qui peuvent gérer une conversion ou correspondance d'adresses entre un espace d'adressage quelconque d'un sous-réseau d'une part, et l'espace d'adressage IP d'un réseau principal (e.g. internet) d'autre part.

Les sous-réseaux 11, 12, 13 et 14 peuvent être des réseaux spécifiquement dédiés aux objets connectés comme par exemple :
- un réseau Sigfox ;
- un réseau LoRa utilisant le protocole LoRaWAN (acronyme de « Long Range Wide-area Network » selon une terminologie anglo-saxonne) qui comme son nom l'indique est un réseau étendu à longue portée ;
- ou bien des réseaux basés sur un autre protocole sans fil par ondes radio comme par exemple :
   - un réseau à dimension personnelle (ou WPAN, de l'anglais « Wireless Personal Area Networks ») comme un réseau ZigBee basé sur la norme IEEE 802.15.4 ;
   - un réseau Wi-Fi ;ou un réseau Bluetooth (norme IEEE 802.15.1) ; etc.

La présente invention se présente comme un mécanisme permettant d'améliorer les échanges de données (i.e. de messages) d'un objet connecté source se trouvant dans un premier sous-réseau, en particulier de l'IoT1, vers d'autres dispositifs de type objets connectés destinataires se trouvant dans un ou plusieurs sous-réseaux différents. Dans les réseaux de communications de données, les protocoles de la couche transport ont ainsi pour vocation de transporter les données d'une application à une autre (on parle aussi de programmes applicatifs), qui s'exécutent sur des machines hôtes respectives et potentiellement dans des réseaux locaux respectifs distants l'un de l'autre, et connectés ensemble par l'intermédiaire d'un réseau étendu comme Internet.

En particulier, comme cela est représenté dans la figure 1, un des objets connectés source IoT1 est capable de se connecter aux trois sous-réseaux 11, 12, 13 disposants chacun d'une passerelle de connexion. Ainsi, l'objet connecté source IoT1 dispose de plusieurs solutions pour accéder à des sous réseaux distants tel que le sous réseau 14 représenté.

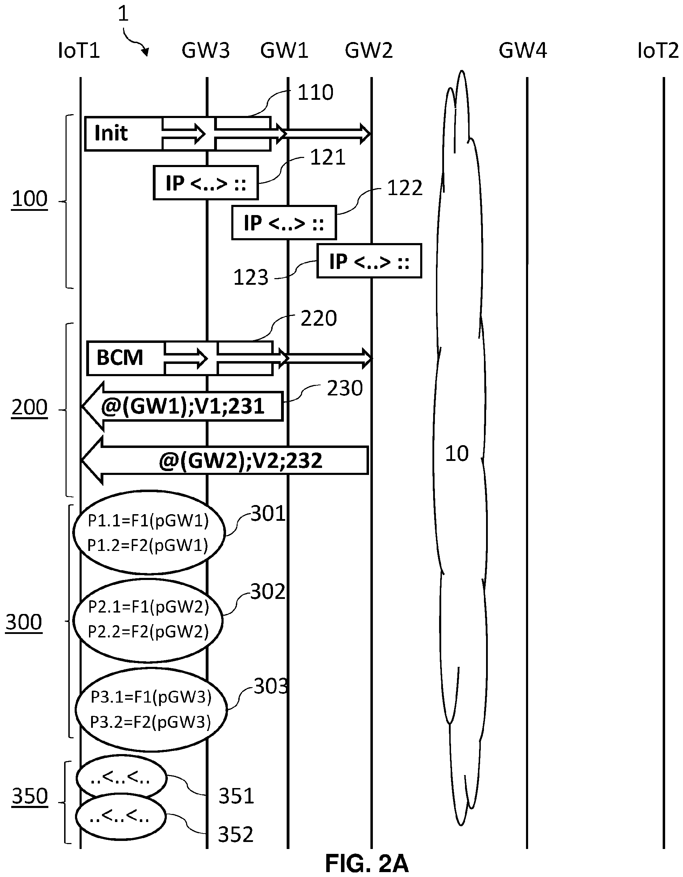

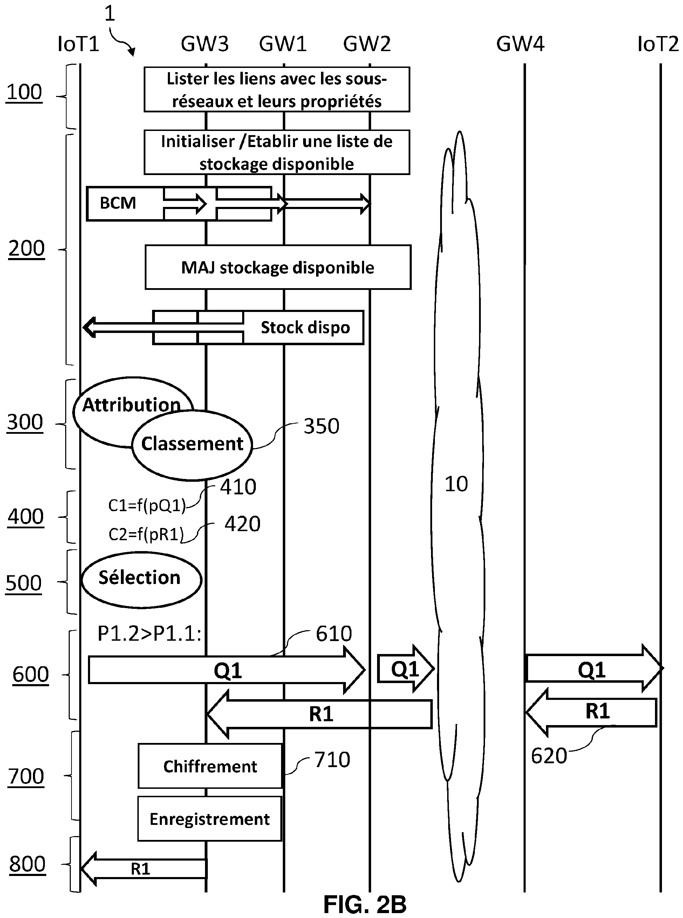

**Des modes de mise en œuvre d'un procédé selon l'invention** vont maintenant être décrits en référence aux diagrammes fonctionnels des figures 2A et 2B. On considèrera à cet effet un cas d'usage dans lequel l'objet connecté source IoT1 de la figure 1 doit envoyer un message, pouvant inclure des données, à l'objet connecté destinataire IoT2 du réseau local 14 puis recevoir une réponse pouvant elle aussi inclure des données. A cet effet, un procédé selon l'invention permet d'utiliser une passerelle de connexion disponible ayant des capacités de stockage disponibles et une plage horaire de disponibilité de stockage correspondant à la plage horaire de connexion prédéterminée de l'objet connecté source. Avantageusement, le procédé permet d'utiliser la passerelle de connexion qui offre les meilleures performances considérant le type de message à recevoir et la passerelle de connexion disponible qui offre les meilleures performances considérant le type de message à envoyer. L'objet connecté source IoT1 est par exemple une station de surveillance et de contrôle d'accès capable de se connecter à trois réseaux de communication : fibre optique via la passerelle GW1, satellite via la passerelle GW2 et 4G via la passerelle GW3. En fonction de la requête à envoyer et de la réponse à recevoir cela ne sera pas obligatoirement la même passerelle qui sera la plus adaptée pour la transmission de ladite requête à envoyer et/ou de ladite réponse à recevoir.

Pour obtenir ce résultat, un procédé 1 selon l'invention, comprend tout d'abord une procédure 200 de découverte de passerelles accessibles par l'objet connecté source IoT1, une procédure de sélection 500 de passerelle de connexion, en particulier comprenant la sélection d'une passerelle de réception, un procédure d'envoi 600 d'un message de requête Q1 par l'objet connecté source IoT1 et une procédure 700 d'enregistrement d'un message de réponse R1 provenant de l'objet connecté destinataire IoT2 ainsi qu'une procédure de livraison du message de réponse R1 par la passerelle de réception.

En outre, dans des modes de mise en œuvre, le procédé 1 peut être précédé d'une procédure 100 d'attribution d'une adresse IP fixe à l'objet connecté source IoT1 et d'un port dédié à cette adresse fixe. Le procédé peut également comprendre de façon avantageuse l'attribution 300 de niveau de priorité à chaque passerelle de connexion avec éventuellement une procédure 350 de classement des passerelles de connexion par ordre de leurs niveaux de priorité et/ou une procédure de catégorisation du message à transmettre.

Ces procédures peuvent être initiées à chaque fois que l'objet connecté source IoT1 se connecte à un nouveau réseau local. De même, ces procédures d'attribution d'adresse IP et de numéro de port 100, de découverte 200, d'attribution 300 de niveau de priorité, et/ou de sélection 500 d'une passerelle de connexion peuvent être déclenchées en réponse à la détection de la déconnexion de l'objet connecté source IoT1 à un sous réseau auquel il était connecté, en raison d'une panne matérielle par exemple, ou encore d'une mise à jour logicielle mais également dans le cadre d'une connexion ponctuelle de l'objet connecté source IoT1 au sous réseau. Ceci permet d'une part, d'adapter les niveaux de priorité respectivement associés aux passerelles disponibles pour l'objet connecté source loT1, et qui sont utilisés par ce dernier comme il sera explicité plus loin, à l'évolution de la connectivité des passerelles, et d'autre part d'augmenter la durée de vie de l'objet connecté source loT1. En outre, ceci permet de diminuer la consommation énergétique et d'augmenter la stabilité du réseau.

Comme représenté à la **figure 2A****,** nous commencerons par exposer **la procédure 100 d'attribution d'une adresse IP fixe à l'objet connecté source IoT1 et d'un port dédié** à ladite adresse IP fixe. Cette procédure 100 d'attribution peut être mise en œuvre par une ou plusieurs passerelles GW1,GW2,GW3.

La procédure 100 d'attribution peut être initiée par l'objet connecté source IoT1 diffusant 110 un message d'annonce Init, par exemple au format UDP Multicast pour « User Datagram Protocol Multicast » selon une terminologie anglo-saxonne. Chacune des passerelles recevant le message d'annonce Init attribue 121, 122, 123 une adresse IP fixe à l'objet connecté source loT1. En outre, chacune des passerelles ayant attribuée une adresse IP fixe à l'objet connecté source IoT1, peut avantageusement associer cette adresse IP fixe à un numéro de port qui sera dédié à ladite adresse IP fixe. En particulier, tous les messages reçus sur ce port dédié de la passerelle seront transmis à l'adresse IP fixe associée à ce port de communication et donc à l'objet connecté source IoT1. Ainsi, les messages de réponse à destination de l'objet connecté IoT1 pourront être rapidement transmis à l'objet connecté source IoT1 par la passerelle de réception car elle pourra associer rapidement la réception d'un message sur un port dédié à la transmission de ce message à un objet connecté donné.

De façon préférée, chaque passerelle liste les liens qu'elle établit avec les différents sous réseaux. Ceci permet la communication entre des objets connectés appartenant à des sous réseaux différents. Les liens que les passerelles établissent entre les sous réseaux sont caractérisés par des paramètres de connectivité qui peuvent être variables. Par exemple des paramètres de connectivité peuvent correspondre au type de réseau, plages d'adressage, débit montant/descendant, qualité de la connectivité, sécurité, coût du transport etc...Ceci permet la découverte des sous réseaux disponibles et accessibles par chaque passerelle ainsi que les objets connectés présents sur chaque sous réseau.

Avantageusement, chaque passerelle de connexion est apte à transmettre une liste de stockage disponible. La liste de stockage disponible comporte des données de capacité de stockage en fonction de plages horaires de disponibilité. Cette liste est organisée de façon à pouvoir indiquer sur des plages horaires prédéterminées les capacités de stockage disponible mise à disposition par chaque passerelle au profit de l'ensemble de ses sous réseaux locaux. La liste de stockage comprend donc les capacités de stockage disponible en fonction d'une plage horaire prédéterminée de la passerelle elle-même La liste de stockage peut également comprendre les capacités de stockage disponible en fonction de plage horaire prédéterminée des IoTs accessibles par ladite passerelle. En effet, chaque IoT peut disposer d'une capacité de stockage. Cette capacité peut alors être mise à disposition des autres loTs pour stocker des messages, afin qu'ils soient transmis/réceptionnés ultérieurement. Par ailleurs, ces plages horaires peuvent être fixées de différentes façons : créneaux fixe, fichiers de configuration. En outre, l'objet connecté source IoT1 peut également et de façon indépendante déterminer la plage horaire qu'il lui convient.

Un procédé selon l'invention comporte une **procédure 200 de découverte de passerelles disponibles pour un objet connecté source IoT1,** telle qu'elle est appliquée aux passerelles GW1, GW2 et GW3, conformément à l'exemple représenté. Cette procédure 200 de découverte est généralement mise en œuvre par l'objet connecté source IoT1.

Cette procédure 200 de découverte de passerelles disponibles peut comprendre initialement la connexion de l'objet connecté source IoT1 à des sous-réseaux disponibles. Les différentes étapes et caractéristiques particulières de cette connexion seront dépendantes des sous-réseaux concernés. Par exemple, la connexion peut comporter des étapes d'attachement initial, d'authentification et d'attribution d'une adresse IP.

Comme cela est illustré dans la figure 2A, la procédure 200 de découverte peut comprendre une étape de diffusion 220 par l'objet connecté source IoT1 d'un message d'interrogation (message BCM, mis pour « Broadcast Message » dans la flèche rectangulaire symbolisant l'étape de diffusion 220 à la figure 2A) dans plusieurs sous-réseaux 11,12,13 de transport de données. Ce message BCM est alors reçu par les passerelles GW1, GW2 et GW3 qui sont connectées aux réseaux locaux 11, 12 et 13, comme représenté à la figure 1, et aussi par les autres objets connectés des réseaux locaux 11, 12 et 13.

En réponse au message d'interrogation BCM émis, comme cela est illustré dans la figure 2A, la procédure 200 de découverte peut comprendre une étape de réception 230 par l'objet connecté source IoT1 d'un message d'information 231, 232 envoyé par chaque passerelle de connexion disponible ayant reçu un message d'interrogation BCM. En outre, l'objet connecté source IoT1 peut également recevoir un message d'information des autres IoT qui contient un identifiant d'un desdits autres objets connectés. Ainsi, en particulier, un message d'information 231 retourné par la passerelle GW1 à l'objet connecté source IoT1 comprend un identifiant de la passerelle GW1 (par exemple son adresse IP notée @(GW1) dans la flèche symbolisant le message d'information 231 à la figure 2A), d'une part, et la liste de stockage disponible, d'autre part. Il peut en outre comporter des valeurs de paramètres de connectivité de la passerelle GW1 et une valeur de durée de validité desdits paramètres de connectivité (notés V1 à la figure 2A). De la même manière, un message d'information 232 retourné par la passerelle GW2 à l'objet connecté IoT1 comprend un identifiant de la passerelle GW2 (par exemple son adresse IP notée @(GW2) dans la flèche symbolisant le message d'information 232 à la figure 2A), d'une part, et la liste de stockage d'autre part. Il peut en outre comporter des valeurs de paramètres de connectivité de la passerelle GW2 et une valeur de durée de validité desdits paramètres de connectivité (notés V2 à la figure 2A). Il en est de même pour la passerelle GW3 (non représenté sur les figures).

L'objet connecté source peut contacter toutes les passerelles de connexion simultanément ou sur une courte période de temps (e.g. inférieure à 2 minutes) puis sélectionner la passerelle de réception. Alternativement, il peut contacter les passerelles de connexion les unes après les autres et si une première passerelle ne dispose d'un créneau disponible, l'objet connecté source contacte alors la passerelle suivante.

De préférence, une fois que les passerelles sont découvertes, la procédure comporte la réception par l'objet connecté source IoT1 pour chaque passerelle accessible du message d'information comportant la liste de stockage disponible.

En outre, l'IoT source IoT1 peut communiquer aux passerelles la liste de stockage qu'il peut mettre à disposition des autres loTs dans le même formalisme que celui utilisé par les passerelles. Les passerelles mettent alors à jour leur liste de stockage avec les données pour chaque sous réseaux concerné.

Ainsi, la procédure de découverte 200 comprend avantageusement, pour chaque objet connecté accessible, une étape de transmission, à une passerelle de connexion, de données de stockage par exemple sous la forme d'une liste de stockage. Les passerelles de connexion peuvent alors retourner à l'objet connecté source IoT1 une liste de stockage mise à jour comportant les données de stockage des objets connectés accessibles par la passerelle de connexion. A expiration d'une durée d'expiration de la validité de ces informations, l'IoT1 pourra recontacter la passerelle pour disposer d'une version actualisée de ces informations.

Comme cela a été détaillé, de préférence, le message d'information 231,232 comprend les paramètres de connectivité des passerelles, une valeur de durée de validité desdits paramètres de connectivité et la liste de stockage disponible.

Il peut arriver que plusieurs passerelles de connexion disposent d'une plage horaire de disponibilité de stockage correspondant à la plage horaire de connexion prédéterminée de l'objet connecté source. Dans ce contexte, la présente invention propose plusieurs modes de réalisation permettant de prioriser les passerelles de connexion en fonction ou non de la catégorie de message à réceptionner. En outre, la présente invention propose également une étape de sélection d'une passerelle d'envoi pouvant utiliser des niveaux de priorité de passerelle préalablement calculés.

Ainsi, de façon avantageuse, le procédé selon l'invention peut comporter une **procédure d'attribution 300 de niveau de priorité à chaque passerelle de connexion de la pluralité de passerelles de connexion, de préférence par catégorie de message à transmettre.** Cette procédure est de préférence réalisée par l'objet connecté IoT1. Ainsi, il n'est pas nécessaire de configurer chacune des passerelles disponibles mais seulement l'objet connecté source IoT1 souhaitant bénéficier du procédé selon l'invention.

En particulier et comme cela est illustré dans la figure 2A, la procédure 300 d'attribution de niveaux de priorité peut comprendre l'exécution 301, 302, 303 par l'objet connecté source IoT1 d'au moins une fonction de priorisation. Ceci permet de calculer des niveaux de priorité pour chaque passerelle de connexion. Cette au moins une fonction de priorisation F1, F2 permet de calculer plusieurs niveaux de priorité P1.1,P1.2,P2.1,P2.2,P3.1,P3.2 pour chacune des passerelles de connexion, chacun des niveaux de priorité P1.1,P1.2,P2.1,P2.2,P3.1,P3.2 correspondant de préférence à une catégorie de message à transmettre.

En particulier, la procédure d'attribution 300 peut comporter l'exécution d'une fonction de priorisation par catégorie de message. En particulier, l'exécution de l'au moins une fonction de priorisation F1, F2 permet de calculer au moins deux niveaux de priorité par passerelle, chacun des niveaux de priorité calculé étant associé à une catégorie de message à transmettre. De façon préférée, elle permet de calculer au moins quatre niveaux de priorité par passerelle, de façon encore plus préférée au moins six niveaux de priorité par passerelle. Ces niveaux de priorité des passerelles par catégorie de message peuvent être mémorisés sur une mémoire de l'objet connecté.

De façon préférée, la procédure 300 d'attribution de niveaux de priorité P1.1,P1.2,P2.1,P2.2,P3.1,P3.2 aux passerelles par catégorie de message à transmettre comprend l'exécution par l'objet connecté IoT1 d'au moins une fonction de priorisation F1, F2, pour calculer des niveaux de priorité P1.1,P1.2,P2.1,P2.2,P3.1,P3.2 pour chaque passerelle à partir des paramètres de connectivité de chaque passerelle, de chaque catégorie de message à transmettre, de liste de stockage disponible en fonction de plage horaire prédéterminée.

Dans un exemple de mise en œuvre d'un procédé conforme à l'invention, deux fonctions de priorisation F1 et F2 ont été mémorisées par l'objet connecté source IoT1 en vue de leur utilisation par ledit objet connecté pour le calcul de deux niveaux de priorité (i.e. un par catégorie de message) pour chacune des passerelles disponibles sur la base des paramètres de connectivité des passerelles et des listes de stockages. Par exemple, la fonction de priorisation F1 permet le calcul de niveau de priorité des passerelles pour la transmission de messages de catégorie « un » C1 tandis que la fonction de priorisation F2 permet le calcul de niveau de priorité des passerelles pour la transmission de messages de catégorie « deux » C2, tels que présentés en lien avec la figure 2A. Alternativement, une seule fonction de priorisation F1, F2 pourrait être utilisée dès lors, par exemple, qu'elle comporte une variable se référant à la catégorie C1, C2 de message et qu'elle peut donc produire plusieurs niveaux de priorité. A la figure 2A, ces calculs ont été symbolisés dans les bulles qui illustrent les étapes d'exécution 301, 302, 303 d'au moins une fonction de priorisation, respectivement par les expressions P1.1=F1(pGW1), P1.2=F2(pGW1), P2.1=F1(pGW2), P2.2=F2(pGW2), P3.1=F1(pGW3), et P3.2=F2(pGW3), respectivement. Ces calculs utilisent donc des fonctions F1 et F2 sur la base de paramètres de connectivité pGW1, pGW2 et pGW3 de chaque passerelle GW1, GW2 et GW3. Ainsi, les niveaux de priorité P1.1, P1.2, P2.1, P2.2, P3.1 et P3.2 qui sont obtenus sont des valeurs véritablement comparables en l'occurrence deux à deux. En effet dans cet exemple, dans le cas d'une catégorie « un » C1 de message, ce sont les niveaux de priorité P1.1, P2.1 et P3.1 qui s'appliqueront tandis que ce sont les niveaux de priorité P1.2, P2.2 et P3.2 qui s'appliqueront dans le cas d'une catégorie « deux » C2 de message.

Dans un exemple de mise en œuvre non limitatif d'un procédé conforme à l'invention, les paramètres de connectivité, propres à chaque passerelle qui sont pris en compte pour le calcul de leur niveau de priorité, comprennent notamment et de manière non limitative :
- un type de connectivité, par exemple le fait qu'il s'agisse d'un réseau filaire, d'un réseau 3G ou 4G-LTE, d'un réseau à courte portée du type Wi-Fi ou Bluetooth, etc. ;
   un coût de transport des données par unité de données, exprimé par exemple par Kilooctet de données transporté ;
- un indice de sécurisation de la transmission,
- un indice de qualité de la connectivité, par exemple un taux moyen d'erreur sur les bits, un temps de latence constaté, et/ou
- un débit de transmission associés à la passerelle considérée ; etc...

Avantageusement, les paramètres de connectivité propres à chaque passerelle comportent au moins un indice représentatif du taux d'échec de transmission de message par chacune des passerelles. De préférence, il s'agit d'un indice représentatif du taux d'échec de transmission de message par catégorie C1, C2 de message par chacune des passerelles. Le taux d'échec de transmission de message est une donnée que les passerelles sont généralement aptes à mémoriser. L'indice représentatif du taux d'échec de transmission de message par catégorie de message peut alternativement être généré par l'objet connecté.

D'une manière générale, ces paramètres rendent compte de la performance des connexions IP établies à travers la passerelle concernée en termes de qualité de service (QoS pour « Quality of Service » selon une terminologie anglo-saxonne), appréciées au regard du débit de transmission, de la latence, d'un taux de retransmission, etc...

En outre, la valeur de durée de validité desdits paramètres de connectivité V1, V2, V3 peut être prise en compte dans la fonction de priorisation F1, F2 et/ou associée au niveau de priorité P1.1,P1.2,P2.1,P2.2, P3.1 et P3.2 calculé.

Ainsi, avantageusement, un procédé selon l'invention peut comprendre en outre une étape de mise à jour (non représenté sur les figures) des niveaux de priorité P1.1,P1.2,P2.1,P2.2,P3.1 et P3.2 ladite étape de mise à jour comportant la transmission par certaines des passerelles de nouveaux paramètres de connectivité à l'objet connecté. Cette transmission se fait généralement suite à la diffusion par l'objet connecté IoT1 d'un message d'interrogation BCM.

De façon préférée, la mise à jour peut comporter l'émission par l'objet connecté d'un message de mise à jour (non représenté sur les figures) à destination de certaines seulement des passerelles, les passerelles destinataires étant sélectionnées en fonction de la valeur de durée de validité des paramètres de connectivité V1, V2, V3 leur étant associée.

En outre, les niveaux de priorité P1.1,P1.2,P2.1,P2.2,P3.1 et P3.2 des passerelles par catégorie C1, C2 de messages peuvent être transmis par l'objet connecté source IoT1 à d'autres objets connectés. Cela peut permettre de partager entre objets connectés une même répartition des passerelles prioritaire par catégorie C1, C2 de message à envoyer.

Dans des modes de mises en œuvre alternatifs, un procédé conforme à l'invention peut comprendre une mise à jour automatique du niveau de priorité P1.1,P1.2,P2.1,P2.2 P3.1 et P3.2 de certaines des passerelles du réseau. Par exemple, la mise à jour automatique du niveau de priorité P1.1,P1.2,P2.1,P2.2,P3.1 et P3.2 par catégorie de message C1, C2, des passerelles est réalisée de manière périodique, à une fréquence qui est programmable au niveau de l'objet connecté.

Un procédé 1 selon l'invention peut avantageusement comporter une répétition périodique des procédures 100, 200, 300 par l'objet connecté IoT1. Alternativement, la répétition peut être fonction de la connexion de l'objet connecté IoT1 à de nouveaux sous-réseaux. Avantageusement, la mise à jour des niveaux de priorité P1.1,P1.2,P2.1,P2.2,P3.1 et P3.2 peut être déclenchée par l'objet connecté IoT1 en fonction de la valeur de durée de validité des paramètres de connectivité V1, V2, V3 des passerelles de connexion et de la liste de stockage.

Par exemple, la mise à jour automatique des niveaux de priorité P1.1,P1.2,P2.1,P2.2, P3.1 et P3.2 des passerelles est réalisée de manière périodique, à une fréquence qui est programmable au niveau de chaque objet connecté, par un nouveau calcul en utilisant la ou les mêmes formules de priorisation F1, F2 telle(s) que mémorisée(s) au niveau de l'objet connecté, mais appliquées à des valeurs mises à jour des paramètres de connectivité des passerelles disponibles au moment de la mise à jour.

L'homme du métier appréciera qu'un procédé selon l'invention et en particulier une procédure 300 d'attribution de niveaux de priorité, peut être appliquée à tout ou partie des passerelles de connexion auxquelles peut se connecter l'objet connecté IoT1.

Ensuite, un procédé selon l'invention peut comporter une **étape 350 de classement** des passerelles de connexion GW1, GW2 et GW3 par ordre de leurs niveaux de priorité respectifs, de préférence en fonction de la catégorie de message à transmettre, en vue par exemple de la sélection de la passerelle de réception. Cette procédure est de préférence réalisée par l'objet connecté source IoT1. Cette procédure 350 de classement permet de sélectionner l'une desdites passerelles pour la transmission de messages ou plus largement d'établir un ordre de préférence pour la transmission d'une catégorie C1, C2 donnée de message. En particulier, elle permet de faciliter la sélection d'une passerelle pour la transmission d'une requête Q1 envoyée par l'objet connecté source IoT1 et d'une passerelle identique ou différente pour la transmission de la réponse R1 à ladite requête.

La procédure 350 de classement comporte par exemple un premier classement 351 des passerelles pour une première catégorie C1 de message puis un second classement 352 des passerelles pour une deuxième catégorie C2 de message. Comme précédemment mentionné, l'envoi de messages de données peut par exemple se faire à destination d'autres objets connectés ou systèmes appartenant à un autre sous-réseau ou à d'autres sous-réseaux.

Bien entendu, ces procédures peuvent également être mises en œuvre par d'autres objets connectés et dans d'autres sous-réseaux comme le réseau local 14, indépendamment de sa mise en œuvre par l'objet connecté source IoT1.

Un procédé 1 selon l'invention peut comporter une **procédure 400 de catégorisation de messages à transmettre.** Cette procédure 400 de catégorisation peut être mise en œuvre par les objets connectés tel que l'objet connecté source IoT1.

Cette procédure 400 de catégorisation comporte en particulier une catégorisation 410 d'une requête Q1 à envoyer par l'objet connecté source IoT1 source de ladite requête. Cette catégorisation permet de définir une valeur de catégorie C1 de la requête Q1. Cette catégorisation peut comporter en particulier l'exécution par l'objet connecté source IoT1 d'au moins une fonction de catégorisation f pour calculer une valeur de catégorie C1 de la requête Q1 à partir de paramètres de message de ladite requête. La procédure 400 de catégorisation comporte également une catégorisation 420 de la réponse R1 attendue par l'objet connecté source IoT1 de façon à définir une valeur de catégorie C2 de la réponse. Comme précédemment mentionné, cette catégorisation 400 peut comporter en particulier l'exécution par l'objet connecté IoT1 d'au moins une fonction de catégorisation f pour calculer une valeur de catégorie C1 de la réponse R1 à partir de paramètres de message de ladite réponse.

Dans un exemple de mise en œuvre d'un procédé 1 conforme à l'invention présenté en figure 2B, une fonction de catégorisation f a été mémorisée par l'objet connecté source IoT1 en vue de son utilisation par ledit objet connecté pour le calcul de deux catégories C1, C2 de message (i.e. une par message requête / réponse) sur la base des paramètres de message de la requête pQ1 et de la réponse pR1. Alternativement, deux fonctions de catégorisation f1 et f2 pourraient être utilisées dès lors, par exemple, qu'une première fonction f1 serait dédiée aux messages à envoyer (i.e. requête) et qu'une seconde fonction f2 serait dédiée aux messages à recevoir (i.e. réponse). A la figure 2B, ces calculs ont été symbolisés dans les bulles qui illustrent les étapes 510 et 520, respectivement par les expressions C1=f(pQ1) et C2=f(pR1), respectivement. Ces calculs utilisent donc la fonction f sur la base de paramètres de message de chaque message de requête Q1 et de réponse R1. Ainsi, les catégories C1 et C2 qui sont obtenus sont des valeurs véritablement comparables. En effet dans cet exemple, le message à envoyer ou requête Q1 est classifié dans la catégorie 1 tandis que le message de réponse R1 est classifié dans la catégorie 2.

Cette catégorisation peut par exemple se faire en fonction de plusieurs paramètres de message tels que de la taille du message à transmettre, d'un type d'application souhaitant envoyer un tel message (identifié par exemple par un code d'application), de l'identité du destinataire, ou encore d'une information sur le type de message à transmettre (e.g. fichier texte, fichier vidéo, vidéo en streaming, voix). En outre, l'attribution de la valeur de catégorie C1, C2 peut se faire via l'utilisation de tables de données ou d'une fonction de catégorisation f permettant de prendre en compte plusieurs paramètres. Ainsi, de façon préférée, un procédé selon l'invention comporte l'identification d'une catégorie de message C1, C2 pour le message de requête à émettre, ladite identification de catégorie comprenant l'utilisation par l'objet connecté IoT1 d'au moins une fonction de catégorisation f pour calculer une valeur de catégorie à partir de caractéristiques du message à transmettre.

Comme représenté à la **figure 2B****,** outre ces procédures optionnelles et avantageuses, un procédé selon l'invention comporte une **procédure 500 de sélection de passerelle de connexion.** Cette procédure 500 de sélection est généralement mise en œuvre par l'objet connecté IoT1 source. De préférence, la procédure 500 de sélection de passerelle de connexion comprend la sélection d'une passerelle de réception. La passerelle de réception achemine les données à transmettre, messages à transmettre, de préférence le message de réponse, entre l'IoT2 destinataire et le moyen de stockage. La passerelle de réception sélectionnée présente avantageusement des données de plage horaire de disponibilité de stockage correspondant à la plage horaire de connexion prédéterminée de l'objet connecté source. Le moyen de stockage peut par exemple se trouver associé à la passerelle de réception ou sur un objet connecté.

Avantageusement, l'étape de sélection 300 peut comprendre la sélection d'une passerelle de réception selon les niveaux de priorités calculés parmi plusieurs passerelles de connexion présentant des données de plage horaire de disponibilité de stockage correspondant à la plage horaire de connexion prédéterminée de l'objet connecté source. En effet, dans le cas où plusieurs passerelles de connexion présentent des plages horaires de disponibilité de stockage communes avec la plage horaire prédéterminée de l'objet connecté source IoT1, alors la sélection est réalisée en fonction du niveau de priorité de chaque passerelle, ledit niveau de priorité prenant en compte de préférence les paramètres de connectivités de chaque passerelle de connexion. De façon encore plus préférée, l'étape de sélection 300 peut comprendre la sélection d'une passerelle de réception selon les niveaux de priorités calculés et en fonction de la catégorie de message à réceptionner.

Dans le cas où aucune passerelle ne dispose d'un créneau acceptable pour l'IoT1, l'IoT devra calculer un nouveau créneau de réception lui permettant de réceptionner directement le message de réponse et donc sans devoir recourir au stockage.

En outre, la procédure de sélection d'une passerelle de connexion peut également être mise en œuvre par l'objet connecté source IoT1 en vue de la sélection d'une passerelle d'envoi. Une passerelle d'envoi participe à l'acheminement des données à transmettre, message à transmettre, de préférence le message de requête, entre l'objet connecté source IoT1 et l'objet connecté destinataire IoT2. Ainsi, l'étape de sélection 300 peut comprendre la sélection d'une passerelle d'envoi selon les niveaux de priorités calculés parmi plusieurs passerelles de connexion. De façon plus préférée, l'étape de sélection 300 peut comprendre la sélection d'une passerelle d'envoi selon les niveaux de priorités calculés et en fonction de la catégorie de message de requête.

La figure 2B illustre également ce qui se passe lorsque l'objet connecté source IoT1 émet une requête Q1 à destination d'un autre objet connecté, en l'occurrence à destination de l'objet connecté destinataire IoT2 du réseau local 14. Il s'agit **de la procédure d'envoi 600 d'un message de requête Q1 par l'objet connecté source IoT1.** Ce message de requête est destiné à l'objet connecté destinataire IoT2. Le message de requête comporte un identifiant de la passerelle de réception sélectionnée.

Cette étape d'envoi 600 suit généralement la catégorisation 400 des messages à transmettre par l'objet connecté source IoT1 décrite précédemment et la sélection de passerelle de connexion. Une telle catégorisation permet d'attribuer une valeur de catégorie C1, C2 auxdits messages. Une fois que les messages à transmettre ont été catégorisés, un procédé conforme à l'invention peut comporter une étape de transmission 610, par l'objet connecté source IoT1, de la requête Q1 à la passerelle disponible qui présente, pour la catégorie C1, C2 du message, le niveau de priorité P1.1,P1.2,P2.1,P2.2, P3.1 et P3.2 maximum. Dans le cas illustré à la figure 2A, la catégorie « un » C1 a été attribuée au message ou requête Q1. Ainsi, étant donné que, comme cela a été précédemment mentionné, c'est la passerelle de connexion GW2 du sous réseau 12 qui présente le niveau de priorité maximum pour cette catégorie de message, la requête Q1 est transmise par l'objet connecté source IoT1 à la passerelle de connexion GW2. En outre, la requête Q1 ainsi transmise (e.g. message transmis) comporte un identifiant de la passerelle de réception GW3 à utiliser pour l'enregistrement et la transmission de la réponse R1 à l'objet connecté source IoT1 et cet identifiant correspond à l'identifiant de la passerelle GW3 qui présente les données de capacités de stockage disponibles selon la plage horaire de disponibilité de stockage correspondant à la plage horaire de connexion prédéterminée de l'objet connecté source IoT1. En outre, c'est la passerelle GW3 qui présente le niveau de priorité P3.2 maximum pour la valeur de catégorie C2 de la réponse R1.
En particulier, en référence à la figure 2B, lorsque la catégorie C1, C2 de message est considérée, si P2.1>P1.1 et P1.2>P2.2 alors la passerelle GW2 ayant un niveau de priorité P2.1 sera prioritaire sur la passerelle GW1 ayant un niveau de priorité P1.1 pour la catégorie C1 de message alors que la passerelle GW1 ayant un niveau de priorité P1.2 sera prioritaire sur la passerelle GW2 ayant un niveau de priorité P2.2 pour la catégorie C2 de message.

Avantageusement, la requête Q1 transmise comporte également le port de la passerelle GW3 qui a été dédié à l'objet connecté source IoT1. Ainsi, ce port pourra être utilisé pour la transmission de la réponse R1 par la passerelle de réception GW3. Dans ces conditions, la passerelle de réception GW3 pourra transmettre rapidement le message de réponse R1 à l'objet connecté IoT1 durant la plage horaire de connexion prédéterminée. La passerelle GW3 correspond alors à la passerelle dont le niveau de priorité est le plus élevé parmi les passerelles disposant des capacités de stockage nécessaires dans le créneau horaire souhaité.

De façon préférée, la requête Q1 transmise peut également comporter une indication temporelle correspondant à une période durant laquelle la réponse R1 doit être transmise. Cette indication temporelle peut par exemple être codée selon les standards internationaux.

En outre, la période peut correspondre à un jour et un horaire précis ou bien à une plage temporelle durant laquelle la réponse R1 pourra être transmise. Ainsi, la passerelle présentant le niveau de priorité le plus élevé pour la transmission de la réponse R1 conservera ledit message de réponse R1 jusqu'à ce que ladite période indiquée soit atteinte. En outre, l'indication temporelle peut correspondre à une période redondante tel que par exemple un horaire donné tous les jours de la semaine.

En outre, la requête Q1 transmise peut comporter une date d'expiration. Dans ce cas, chaque passerelle utilisée pour la transmission de la requête Q1 réalise une vérification de la date d'expiration et est configurée pour supprimer les messages qui ont expirés.

En outre, une requête Q1 émise par l'objet connecté source IoT1, peut contenir :
- un type de message (par exemple le type « données » dans l'exemple considéré ici) ;
- un identifiant unique de l'expéditeur (par exemple son adresse IP)
- un identifiant unique du destinataire (par exemple son adresse IP)
- un code d'application identifiant l'application émettrice du message de requête envoyé, et un numéro unique du message incrémenté (en cas de retransmission du même message ou requête Q1) ;
- des données applicatives ;
- une somme de contrôle (« Checksum » en anglais) permettant de valider l'intégrité du message transmis,
- La date d'expiration,
- La passerelle à utiliser pour la réponse, et/ou
- L'heure de la transmission de la réponse.

Alternativement, la passerelle peut être sélectionnée selon une fonction de priorisation et peut être différente de la passerelle de stockage.

Suite à la réception du message Q1 (i.e. requête), le destinataire final IoT2 prépare et transmet 620 un message de réponse R1 à l'objet connecté source IoT1. Le message de réponse R1 peut utiliser le même mécanisme de transport à l'exception que la passerelle utilisée pour transmettre le message de réponse R1 à l'objet connecté source IoT1 sera la passerelle désignée dans la requête Q1. C'est-à-dire la passerelle GW3 dont le niveau de priorité sera le plus élevé pour la catégorie du message de réponse et comprenant des données de plage horaire de disponibilité de stockage correspondant à la plage horaire de connexion prédéterminée de l'objet connecté source IoT1.

En outre, à réception du message ou requête Q1, le destinataire final IoT2 transmet le message à l'applicatif qu'il héberge. Cet applicatif retourne alors un message d'acquittement à destination de l'expéditeur IoT1. Le message d'acquittement peut utiliser le même mécanisme de transport que la requête Q1. Alternativement, il peut emprunter un chemin différent en appliquant le même principe d'acheminement de message de réponse et peut donc utiliser le même mécanisme de transport que la réponse R1.

Le message d'acquittement peut contenir :
- l'identifiant de l'expéditeur (son adresse IP dans l'exemple) ;
- l'identifiant du destinataire (son adresse IP dans l'exemple) ;
- un code d'application et le numéro unique du message ou requête Q1 d'origine ; ainsi que de préférence
- sa date d'expiration ;
- le type de message, à savoir « acquittement » dans le cas présent ; et/ou,
- une somme de contrôle permettant de valider l'intégrité du message d'acquittement transmis.

Chaque objet connecté gère une liste de messages reçus. Ainsi, si un message déjà traité par l'objet destinataire IoT2 est à nouveau reçu, il est simplement acquitté sans nouveau traitement.

Les messages non acquittés après l'expiration d'un délai de remise prévu, éventuellement paramétrable, sont retransmis de façon automatique par l'objet connecté source IoT1. Avantageusement, le routage du message ou requête Q1 retransmis tient compte d'une éventuelle mise à jour du maillage des réseaux locaux 11, 12 et 13 suite à la perte de connectivité d'une ou plusieurs passerelles, par exemple. Ceci est avantageux car si la non remise du message de requête Q1, dans le temps imparti, a été causée par un problème au niveau de la passerelle GW1, GW2 ou GW3 par laquelle le message Q1 d'origine a été routé, alors la retransmission du message Q1 peut éviter de rencontrer le même problème. Dit autrement, l'adaptation du routage des messages émis par l'objet connecté IoT1 à toute évolution de la connectivité des passerelles disponibles permet d'éviter que des problèmes liés à une passerelle défaillante ne se répètent d'une (re)transmission à l'autre du message non remis au destinataire final dans le temps imparti.

De préférence, une étape d'envoi d'un message de réponse est mise en place selon un procédé de l'invention. Cette étape est mise en œuvre par l'objet connecté destinataire IoT2. Ainsi, un message de réponse est émis par l'objet connecté dentinaire IoT2 en réponse à la réception du message de requête émis par l'objet connecté source l'IoT1. Ce message de réponse est émis par l'objet connecté destinataire et acheminer jusqu'à la passerelle de réception.

Concernant le routage de chaque occurrence (quand il y en a plusieurs en raison d'une retransmission, le cas échéant) du message ou requête Q1 émis par l'objet connecté source IoT1, il convient de distinguer deux cas. Ces deux cas se distinguent selon le classement des niveaux de priorité P1.1, P1.2, P2.1, P2.2, P3.1 et P3.2 des passerelles GW1,GW2 et GW3 respectivement, qui permettent d'établir la connexion à un réseau principal, tel qu'à titre d'exemple non limitatif le réseau Internet, de l'objet connecté source IoT1.

Le message ou requête Q1 est transmis par l'objet connecté source IoT1 à la passerelle qui présente le niveau de priorité le plus élevé, en vue de sa transmission à l'objet connecté IoT2. On notera que le niveau le plus élevé peut correspondre à une valeur qui est soit la plus faible soit la plus élevée, en fonction de la fonction de calcul de priorisation.

Si, pour cette catégorie de message, la passerelle GW2 a un niveau de priorité P1.2 plus élevé que le niveau de priorité P1.1 de la passerelle GW1 (cas P1.2>P1.1 pour l'envoi 610 à la figure 2B), le message ou requête Q1 est transmis à l'étape 610 à la passerelle GW2 la plus prioritaire. Il atteint *in fine* l'objet connecté destinataire IoT2 après transmission à travers l'Internet 10, sous réserve bien entendu de son acheminement dans le temps imparti car il peut être détruit au passage de tout équipement de réseau (passerelle, routeur) si sa durée de validité a expiré avant qu'il n'atteigne la destination. Un message d'acquittement A1 est renvoyé par l'objet connecté destinataire IoT2 à destination de l'objet connecté source IoT1, ledit message d'acquittement A1 emprunte alors une connexion qui peut être la même route en retour, c'est-à-dire que ladite connexion peut se faire également via la passerelle GW3 (comme dans l'exemple représenté en figure 2B), ou être une autre route, en fonction des algorithmes de routage mis en œuvre dans le réseau Internet 10. Ainsi, le fait que l'accès au réseau Internet 10 se soit fait par l'intermédiaire de la passerelle GW2 pour l'envoi du message ou requête Q1 par l'objet connecté source IoT1 ne contraint nullement l'établissement du chemin de connexion pour le retour du message d'acquittement correspondant A1 depuis l'objet connecté destinataire IoT2.

Dans le cas inverse où la passerelle GW1 aurait un niveau de priorité P1.2 plus élevé que le niveau de priorité P2.2 de la passerelle GW2, le message Q1 (de catégorie C2) serait transmis à la passerelle GW1 la plus prioritaire. Le message d'acquittement A1 renvoyé par l'objet connecté destinataire IoT2 à destination de l'objet connecté source IoT1 emprunterait alors une connexion qui là encore peut être la même route en retour, c'est-à-dire se faire via la passerelle GW1, ou être une autre route, en fonction de l'algorithme de routage mis en œuvre dans le réseau principal.

Un procédé selon l'invention comprend **une procédure d'enregistrement 700** d'un message de réponse. De préférence, le message de réponse provient de l'objet connecté destinataire IoT2. L'enregistrement est réalisé par la passerelle de réception sur un moyen de stockage. Le stockage du message de réponse sur un moyen de stockage comprend un moyen de stockage d'une passerelle de connexion et/ou sur un moyen de stockage d'un objet connecté appartenant au réseau de ladite passerelle de connexion. De façon préférée, le stockage du message de réponse est réalisé sur un moyen de stockage d'un objet connecté appartenant au réseau de ladite passerelle de connexion. Dans le cas de l'enregistrement ou du stockage du message de réponse sur un objet connecté du réseau de la passerelle, le procédé comprend une étape de chiffrement 710 dudit message de réponse avant l'enregistrement du message de réponse sur le moyen de stockage, de préférence d'un objet connecté. Ceci permet d'assure l'intégrité, la pérennité et la sécurité du message de réponse.

De préférence, le chiffrement est réalisé grâce à des algorithmes asymétriques afin d'assurer la protection des données en transit mais également des données stockées. Des exemples d'algorithmes asymétriques peuvent être : RSA (Rivest Shamir Adelman en terminologie anglo-saxonne), ou EC (pour Elliptic Curve en terminologie anglo-saxonne). Enfin, les clés peuvent être échangées selon un protocole de communication sécurisé tel que TLS (pour Transport Layer security en terminologie anglo saxonne) ou SSL (pour Secure Sockets layer en terminologie anglo-saxonne), DH (pour Diffie-Hellman en terminologie anglo-saxonne), STS (pour Station-to-station en terminologie anglo-saxonne) ou grâce à des fonctions dérivatives de type KDF (pour Key derivative function en terminologie anglo-saxonne).

Alternativement des algorithmes symétriques ou des fonctions de hachage peuvent être prévus tel que SHA-1, SHA-2, SHA-3, AES, IDEA, 3DES, RC5.

Un procédé selon l'invention comprend **une procédure de livraison 800** du message de réponse. De préférence, le message de réponse est livré par la passerelle de réception. Le message de réponse est transmis à l'objet connecté source durant la plage horaire de connexion prédéterminée. De préférence, à la plage horaire prédéterminée ; l'objet connecté source IoT1 se connecte au réseau et la passerelle de réception achemine le message de réponse. Ainsi la passerelle se charge de récupérer le message de réponse et de le transmettre à l'IoT1. A la plage horaire prédéterminée IoT1 contacte la passerelle sur le port indiqué dans le message de présentation qu'il a reçu. Ainsi, l'IoT1 se connecte de façon ponctuelle au réseau et selon une plage horaire adaptée. Le message est stocké grâce à un moyen de stockage disponible et accessible. Ceci permet d'augmenter la durée de vie de l'IoT1, d'augmenter la stabilité du réseau, de diminuer la consommation énergétique tout en améliorant la sécurité des échanges de données. Ceci permet également d'améliorer la communication et de faciliter la communication au sein de réseau hétérogène.

L'homme du métier appréciera que la transmission d'un message par l'objet connecté IoT1 intervient directement à destination de l'objet connecté destinataire, c'est-à-dire sans passer par une quelconque passerelle donc sans considération de leurs niveaux de priorité respectifs, si ledit objet connecté destinataire appartient à un même sous-réseau 11 ou 12 que l'objet connecté source IoT1. Ce cas n'est pas représenté par les figures 2A et 2B car il ne correspond pas à la mise en œuvre de l'invention.

Un exemple de procédé selon l'invention peut comprendre le cas d'un téléchargement de fichier de taille définie prévu à un temps T1, il est possible de ne récupérer le fichier qu'au moment où celui-ci peut être visionné à un temps T2 sans surcharger le réseau. La demande de téléchargement peut être faite par un IoT1 source (tablette connectée par exemple) sur le réseau LAN, puis se déconnecter du réseau LAN et rester libre sur un autre réseau par exemple pour réaliser une mise à jour de son système d'exploitation. En parallèle les passerelles du réseau LAN et de l'IoT1 sont priorisées en fonction des paramètres de connectivités des passerelles, de la liste de stockage, de préférence mise à jour, des niveaux de priorité etc..., tels que décrit ci-dessus. Le moyen de stockage comprenant des capacités de stockage correspondant à la taille du fichier de téléchargement entre T1 et T2 est défini. Si celui-ci se trouve sur un autre IoT accessible par la passerelle de réception, le fichier de téléchargement sera chiffré. Ainsi, lorsque la mise à jour est terminée à T2, la tablette (loT1) peut se reconnecter à la plage horaire (T2), le fichier est déchiffré et récupéré pour être visionné par l'IoT1 à T2.

L'IoT1 peut également rester disponible sur un autre réseau pour récupérer des données plus volumineuses et donc quitter un premier environnement pour éviter de perturber l'ensemble des sous réseaux, la plage horaire étant prédéterminée.

En résumé, la mise en œuvre d'un procédé conforme à l'invention permet de proposer :
- un routage auto adaptatif des messages, en ce sens qu'il s'adapte d'une part à la catégorie de message à transmettre et d'autre part à l'état de connectivité des passerelles de connexion disponibles, le cas échéant, ledit état de connectivité étant évolutif, comme il a précédemment été exposé ;
- une optimisation des coûts de transport des messages puisque, à tout moment, la passerelle utilisée pour établir la connexion d'un objet connecté du réseau local à un autre objet connecté est la passerelle qui présente la plus grande priorité en ce sens qu'elle offre globalement les meilleures caractéristiques de connexion pour cette catégorie de message ;
- une gestion de la durée de validité des messages transmis comme les mises en œuvre de protocoles en mode connecté de l'art antérieur. Dans le contexte général de l'IdO, l'invention se présente comme un mécanisme permettant de transmettre les données d'un objet connecté adapté pour être connecté à un sous-réseau donné vers un autre objet connecté appartenant à un sous-réseau différent. Ce mécanisme opère au niveau de la couche 4 du modèle d'interface des systèmes ouverts, ou OSI (de l'anglais « Open System Interface »), de l'Organisation internationale de normalisation ou ISO (en anglais : « International Standard Organization »). La couche 4 du modèle OSI est la couche Transport, qui est la première des couches hautes, directement par-dessus les trois couches matérielles : Physique, Liaison, et Réseau. Par-dessus la couche Transport se trouvent les autres couches hautes à savoir, dans cet ordre, les couches Session, Présentation et Application, et
- une gestion de la stabilité des réseaux, une augmentation de la durée de vie des loTs et une diminution de la consommation énergétique grâce à la connexion ponctuelle de l'IoT source et à l'organisation des échanges au sein du réseaux en prenant en compte les capacités de stockages disponible en fonction de plages horaires.

Dans ce contexte, un des acteurs principaux pour le procédé d'optimisation de l'utilisation de sous-réseaux en fonction de catégorie de message à transmettre décrit dans la présente invention est l'objet connecté (l'objet connecté source) lui-même.

Ainsi, selon **un autre aspect,** l'invention porte sur un **objet connecté IoT1** à plusieurs sous-réseaux comprenant une pluralité de passerelle GW1,GW2,GW3 de connexion à des sous réseaux de transport de données pouvant présenter des normes de communication différentes. L'objet connecté est également apte à communiquer avec au moins un deuxième objet connecté. Les passerelles sont configurées pour permettre la communication entre des objets connectés appartenant à des sous réseaux différents. L'objet connecté étant apte à, de préférence configuré pour, mettre en œuvre un procédé d'optimisation d'échanges de données selon l'invention.

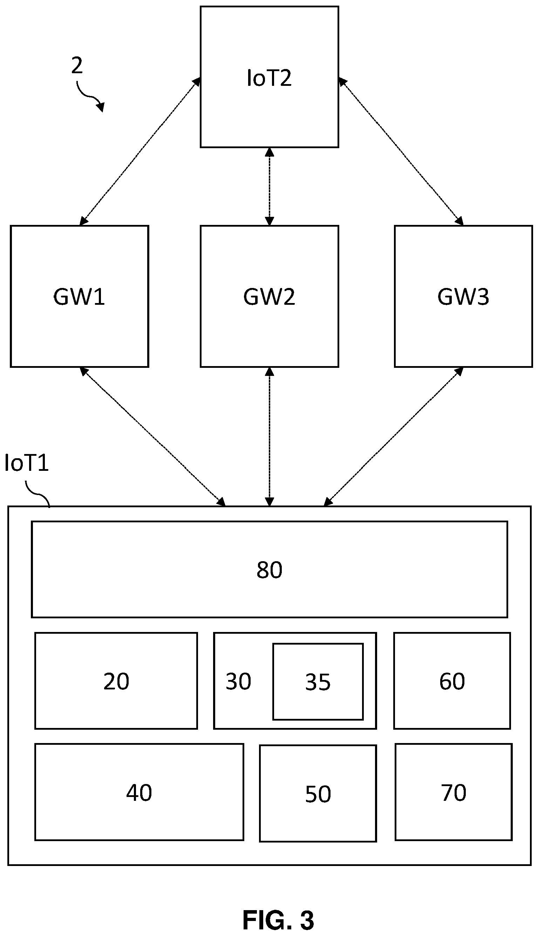

En particulier, comme illustré à la **figure 3****,** un objet connecté loT1 selon l'invention comprend un module 20 de découverte, un module 50 de sélection de passerelle et une interface réseau 60. Un tel objet connecté peut alors choisir l'une des passerelles de connexion disponibles pour le stockage d'un message de réponse jusqu'à une plage horaire de connexion prédéterminée. L'objet connecté également comprendre un module 30 d'attribution de niveaux de priorité aux passerelles de connexion, un module 40 de catégorisation de messages et un module 70 de chiffrement configuré pour chiffrer et/ou déchiffrer les données échangées. Avec cela il peut en outre, sélectionner des passerelles de connexion en fonction de leurs performances ou caractéristiques, de la catégorie du message à transmettre, de plage horaire et de leur possibilité de stockage

Le **module 20 de découverte** comporte des moyens de connexion de l'objet connecté aux sous-réseaux disponibles, des moyens de diffusion d'un message d'interrogation dans les sous-réseaux disponibles, des moyens de réception du message de présentation comprenant la liste de stockage disponible pour chaque passerelle, des moyens de réception d'un message de réponse, non représentés dans les figures, envoyé par chacune des passerelles disponibles en réponse au message d'interrogation. En particulier, le message de réponse R1 contient des paramètres de connectivité de la passerelle et une valeur de durée de validité V1, V2, V3 desdits paramètres de connectivité. Les moyens de connexion, diffusion et réception sont des moyens de communication pouvant inclure des caractéristiques connues de la personne de l'art. Il peut s'agir de tout agencement matériel et logiciel apte à permettre l'échange de données entre l'objet connecté IoT1 et plusieurs passerelles GW1, GW2, et GW3. Les moyens de communication permettent en outre, de transmettre les données sur au moins un réseau de communication et peuvent comprendre une communication filaire ou sans fil. De préférence, la communication est opérée par l'intermédiaire d'un protocole sans fil tel que wifi, 3G, 4G, et/ou Bluetooth. Ces échanges de données peuvent prendre la forme d'envoi et de réception de fichiers ou de messages protocolaires. Les moyens de communication peuvent en outre être configurés pour permettre la communication avec un terminal distant, dont un client. Les moyens de communication peuvent en particulier être configurés pour mettre à jour périodiquement la ou les fonction(s) de priorisation et/ou de catégorisation de message. Les moyens de communication peuvent également être configurés pour communiquer avec une interface homme-machine. En particulier, le module 20 de découverte peut être configuré pour émettre un message d'interrogation de type BCM qui permettra à chaque passerelle ayant reçu le message d'interrogation d'envoyer un message de réponse idoine à destination de l'objet connecté ayant envoyé/transmis/émis un message d'interrogation de type BCM. En outre, le module 20 de découverte peut également être configuré pour émettre un message d'annonce Init qui permettra à chaque passerelle ayant reçu le message d'annonce d'attribuer à l'objet connecté une adresse IP fixe et un port dédié.

**Le module 30 d'attribution de niveaux de priorité aux passerelles de connexion** est configuré pour calculer des niveaux de priorités des passerelles, de préférence par catégorie de messages et peut comporter un processeur pour calculer des niveaux de priorité pour chaque passerelle de préférence en fonction de la catégorie de message à transmettre. Avantageusement, le module 30 de sélection de passerelle peut être configuré pour exécuter au moins une fonction de priorisation, pour calculer des niveaux de priorité pour chaque passerelle en fonction de la catégorie de message à transmettre. La fonction de priorisation peut de façon préférée utiliser des paramètres de connectivité desdites passerelles.

En particulier, le module 30 d'attribution de niveaux de priorité aux passerelles de connexion peut être configuré pour associer une fonction de calcul, nommée fonction de priorisation, à chaque catégorie de message à transmettre. Cette fonction contient en variable un ou plusieurs paramètres de connectivité des passerelles selon l'importance de ces paramètres pour la transmission du message et leur affecte un coefficient d'importance.

En outre, le module 30 d'attribution de niveaux de priorité aux passerelles de connexion peut comporter ou être couplé à d'autres moyens tels que des combinaisons de processeurs, de mémoire ainsi que de codes supportant des instructions.

Ainsi, chaque passerelle sera associée à son propre niveau de priorité par catégorie de message à transmettre, calculé avec une ou plusieurs fonctions de priorisation F1, F2 comprises dans la mémoire de donnée de l'objet connecté par l'objet connecté, ce qui permet d'obtenir des valeurs qui sont comparables entre elles pour définir un niveau de priorité par catégorie de message à transmettre.

Cette ou ces fonctions de priorisation F1, F2, de même que la fonction de catégorisation f, pourront par exemple être acquises par l'objet connecté *via* un appel à un ou plusieurs fichiers de configuration ou bien à des instructions transmises à partir d'une interface (e.g. graphique). Ainsi, le module 30 de sélection de passerelle peut être configuré pour recevoir et prendre en compte des fonctions de priorisation par exemple mémorisées sur une mémoire telle qu'une mémoire vive.

En particulier, un objet connecté selon l'invention est apte à, de préférence configuré pour, mémoriser une ou plusieurs fonctions de priorisation F1, F2 et/ou de catégorisation f. Par exemple, le module 80 de mémorisation est de préférence configuré pour mémoriser une ou plusieurs fonctions de priorisation de façon à pouvoir générer un niveau de priorité par catégorie de message à transmettre. Pour cela, le module 80 de mémorisation peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 80 de mémorisation peut comprendre une pluralité d'instructions ou de modules ou d'applications pour effectuer diverses fonctionnalités. Ainsi, le module 80 de mémorisation peut mettre en œuvre des routines, des programmes, ou des structures de données de type matricielle. De façon préférée, le module 80 de mémorisation peut comprendre un support lisible par un système informatique sous la forme d'une mémoire volatile, telle qu'une mémoire vive (RAM) et / ou une mémoire cache. Le module 80 de mémorisation, comme les autres modules, peut par exemple être connecté avec les autres composants de l'objet connecté IoT1 via un bus et une ou plusieurs interfaces de support de données.

**Le module 35 de classement des passerelles** est avantageusement configuré pour classer les passerelles par ordre de leurs niveau de priorité P1.1,P1.2,P2.1,P2.2, P3.1 et P3.2 respectif en fonction d'une catégorie C1, C2 de message à transmettre. Cela permet à l'objet connecté de réaliser un choix rapide de la passerelle disponible la plus adaptée pour l'envoi d'un message de requête.

Un objet connecté IoT1 selon l'invention peut en outre comporter notamment un **module 40 de catégorisation de messages.** Ce module 40 comporte en particulier des moyens configurés pour catégoriser un message à transmettre. Il peut s'agir de tout agencement matériel et logiciel apte à permettre l'attribution une valeur de catégorie C1, C2 audit message à transmettre.

Ce module 40 de catégorisation de messages est en particulier configuré pour catégoriser une requête Q1 à envoyer par l'objet connecté IoT1 de façon à définir une valeur de catégorie C1 de la requête Q1 et pour catégoriser une réponse R1 attendue par l'objet connecté source IoT1 de façon à définir une valeur de catégorie C2 de ladite réponse.

Avantageusement, le module 40 de catégorisation de messages est configuré pour exécuter au moins une fonction de catégorisation f permettant de calculer les valeurs de catégorie C1, C2 de la requête Q1 et de la réponse R1 à partir de paramètres de message de ladite requête et de ladite réponse.

Le **module 50 de sélection de passerelle** est de préférence configuré pour sélectionner une passerelle de réception. Le module de sélection est apte, de préférence configuré pour, sélectionner la passerelle présentant des données de plage horaire de disponibilité de stockage correspondant à la plage horaire de connexion prédéterminée par l'objet connecté source.

Ce module peut également comporter un processeur pour calculer des données de plage horaire de disponibilité de stockage correspondant à la plage horaire de connexion prédéterminée de l'objet connecté source.

En outre, le module 30 de sélection de passerelle peut comporter ou être couplé à d'autres moyens tels que des combinaisons de processeurs, de mémoire ainsi que de codes supportant des instructions.

Un objet connecté selon l'invention peut notamment comporter une **interface réseau 60.** Cette interface réseau comporte en particulier des moyens configurés pour transmettre une requête Q1 à une passerelle disponible GW2 présentant un niveau de priorité P2.1 maximum pour la valeur de catégorie C1 de la requête Q1, ladite requête transmise comportant un identifiant de la passerelle à utiliser pour la transmission de la réponse R1 à l'objet connecté IoT1, ledit identifiant correspondant à une passerelle GW3 présentant un niveau de priorité P3.2 maximum pour la valeur de catégorie C2 de la réponse.

Cette interface réseau 60 comporte également des moyens de transmission du message Q1 ou requête, configurés pour envoyer ledit message Q1 à la passerelle disponible qui présente le niveau de priorité P1.1,P1.2,P2.1,P2.2, P3.1 et P3.2 maximum pour la valeur de catégorie C1, C2 du message à transmettre. Le message ou requête Q1 est par exemple envoyé par un objet connecté IoT1 à destination d'un autre objet connecté IoT2 au travers d'au moins une passerelle de connexion.

Un objet connecté selon l'invention peut notamment comporter **un module 70 de chiffrement.** Ce module 70 de chiffrement est configuré pour chiffrer et/ou déchiffrer les données échanger entre l'IoT1 source et un objet connecté du réseau d'une passerelle de connexion. Ce moule 70 de chiffrement permet d'assurer la sécurité dans l'échange de données. En outre, un tel module peut comporter l'ensemble des moyens nécessaire à la mise en œuvre du chiffrement et/ou du déchiffrement. Par exemple un module de chiffrement est configuré pour échanger selon un protocole de communication sécurisé, mettre en œuvre des algorithmes symétrique et/ou asymétrique, fonction de hachage et échanger des clés dans le cadre de chiffrement asymétrique. En outre, un module de chiffrement 70 est également configuré pour stocker et gérer les clés publiques (PKI) afin d'augmenter la sécurité dans l'échange de données.

**Selon un autre aspect,** l'invention porte sur un **système 2 d'optimisation d'échanges** de données dans une infrastructure d'objets connectés comportant une pluralité de passerelles GW1,GW2,GW3 de connexion à des sous réseaux de transport de données pouvant présenter des normes de communication différentes. L'infrastructure d'objets connectés comprend au moins un objet connecté source IoT1 et un objet connecté destinataire IoT2 chacun étant aptes à accéder à au moins une passerelle de la pluralité de passerelles de connexion. Chacune des passerelles de connexion est en particulier apte à transmettre une liste de stockage disponible comportant des données de capacité de stockage en fonction de plage horaire de disponibilité de stockage accessibles à la passerelle de connexion.

L'objet connecté source est configuré pour accéder à au moins une passerelle de la pluralité de passerelles durant une plage horaire de connexion prédéterminée. En outre, l'objet connecté source est également configuré pour sélectionner une passerelle de réception présentant des données de plage horaire de disponibilité de stockage correspondant à la plage horaire de connexion prédéterminée par l'objet connecté source. La passerelle de réception est en particulier configurée transmettre le message de réponse à l'objet connecté source durant la plage horaire de connexion prédéterminée.

En outre, dans le cadre du système 2 d'optimisation d'échanges selon l'invention, l'objet connecté source est configuré pour initier une procédure de communication avec l'objet connecté destinataire comportant :
- Une procédure de découverte, comportant la réception par l'objet connecté source pour chaque passerelle accessible d'un message d'information comportant la liste de stockage disponible ;
- Une procédure de sélection de passerelle de connexion, par l'objet connecté source, comportant la sélection d'une passerelle de réception, ladite passerelle de réception, présentant des données de plage horaire de disponibilité de stockage correspondant à la plage horaire de connexion prédéterminée de l'objet connecté source ; et
- Une procédure d'envoi d'un message de requête par l'objet connecté source destiné à l'objet connecté destinataire, ledit message de requête comportant un identifiant de la passerelle de réception sélectionnée.

La passerelle de réception est quant à elle avantageusement configurée pour réaliser :
- Une procédure d'enregistrement d'un message de réponse provenant de l'objet connecté destinataire, comportant l'enregistrement du message de réponse sur un moyen de stockage ;
- Une procédure de livraison du message de réponse comportant la transmission du message de réponse à l'objet connecté source durant la plage horaire de connexion prédéterminée.

Ce système 2 est particulièrement adapté pour la mise en œuvre d'un procédé 1 selon l'invention. En outre, le système comporte des passerelles GW1,GW2,GW3 accessibles par un objet connecté selon l'invention et les passerelles peuvent transmettre un message envoyé par un objet connecté IoT1 à un autre objet connecté IoT2, récepteur, situé sur un autre sous-réseau.

En particulier, les passerelles sont configurées pour envoyer un message d'information 231,232 en réponse au message d'interrogation BCM de l'objet connecté IoT1. Ces messages comportent notamment des paramètres de connectivité des passerelles et une valeur de durée de validité V1, V2, V3 desdits paramètres de connectivité.

Les passerelles de connexion sont des équipements qui permettent la communication, l'échange et le transport de données ou messages entre objets connectés. Une passerelle assure la connexion entre des équipements d'un réseau local, chacun étant associé à une adresse IP locale, et des services de réseau principal associés à des adresses IP publiques. Ainsi, une même passerelle peut posséder au moins deux adresses IP. Le protocole IP (Internet Protocol) est la norme utilisée par les équipements connectés au réseau Internet pour communiquer entre eux. Ce protocole utilise une adresse (adresse IP) qui permet l'identification de l'équipement sur le réseau. De manière plus générale, une adresse IP est un numéro unique attribué à chaque équipement connecté à un réseau informatique : passerelle, ordinateurs, smartphones, serveurs sur Internet assurant un service, objets connectés sur un réseau local.... Cette adresse permet d'identifier individuellement les équipements sur le réseau, de les faire communiquer entre eux, et de les connecter à Internet. Il existe deux types d'adresses IP, à savoir les adresses IP publiques, d'une part, et les adresses IP locales, d'autre part.

Les adresses IP locales d'un réseau IP local filaire de type Ethernet (norme IEEE 802.3), par exemple, ou d'un réseau IP local sans fil de type Wi-Fi (norme IEEE 802.11a/b/g/n/ac), par exemple, sont gérées au niveau du réseau local, entre la passerelle de connexion du réseau local à Internet, et les équipements (ordinateurs, mobiles, objets connectés...) appartenant audit réseau local. Par exemple, un modem (i.e., une box) d'un fournisseur d'accès à Internet (FAI) est une passerelle de connexion à Internet qui possède une adresse IP locale spécifique par défaut. Les équipements d'utilisateur du réseau local qui sont connectés à la box pour accéder à Internet à travers ladite box, possèdent une adresse IP attribuée individuellement par la box, de même que tous les objets connectés au réseau local desservi par cette box. On notera que les adresses IP locales ne sont pas présentes sur Internet car leur fonction est seulement de permettre l'échange de données entre la passerelle de connexion à Internet et les équipements du réseau local.

L'adresse IP utilise un format spécifique défini par le protocole IP. Selon le format du protocole IP v4 (Internet Protocol Version 4), l'adresse IP est composée de 4 groupes de chiffres décimaux, qui représentent chacun une valeur entre 0 à 255, et séparés par le symbole « point » (exemple : 92.169.1.25). Ainsi, la plage d'adresses IP est potentiellement de 0.0.0.1 à 255.255.255.255. Le protocole IP v4 est utilisé à la fois pour les adresses IP locales et pour les adresses IP publiques. On notera toutefois que le format IP v6 (Internet Protocol Version 6) est amené à succéder au format IP v4, selon lequel l'adresse IP est composée de 8 groupes de 4 caractères hexadécimaux, notés de 0 à 9 et de A à F, et séparés par le symbole « deux-points ».

Selon un autre aspect, l'invention porte sur **produit programme d'ordinateur** pour l'optimisation d'échanges de données dans une infrastructure d'objets connectés. Ce programme comprend des instructions qui, lorsque le programme est exécuté par un ordinateur, conduisent celui-ci à mettre en œuvre les étapes du procédé selon l'invention. Un tel programme peut être enregistré, stocké sur tout support pouvant par la suite être mis en œuvre par un ordinateur. De préférence, un ordinateur peut également correspondre à tout moyen de lecture de programme tel que tablette, téléphone ou télévision.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Comme cela a été décrit, la présente invention propose des solutions permettant un routage optimisé et auto adaptatif des messages d'un objet connecté, prenant en compte les caractéristiques du message à envoyer, les caractéristiques du message de réponse à recevoir et avantageusement l'état de connectivité de l'ensemble des passerelles de connexion disponibles d'une part ainsi que leurs paramètres de connectivité d'autre part. Ainsi, contrairement à l'état de la technique, la présente invention permet notamment de tirer avantage de la diversité de caractéristiques des messages à transmettre d'une part et de la multiplicité des passerelles d'un sous-réseau et de l'évolution dans le temps de leur connectivité d'autre part.

## Revendications

1. Procédé (1) d'optimisation d'échanges de données dans une infrastructure d'objets connectés comportant une pluralité de passerelles (GW1,GW2,GW3,GW4) de connexion à des sous réseaux (11,12,13,14) de transport de données pouvant présenter des normes de communication différentes, ladite infrastructure d'objets connectés comprenant au moins un objet connecté source (IoT1) et un objet connecté destinataire (IoT2) chacun étant aptes à accéder à au moins une passerelle de la pluralité de passerelles de connexion,
ledit objet connecté source (IoT1) étant configuré pour accéder à au moins une passerelle de la pluralité de passerelles durant une plage horaire de connexion prédéterminée,
chacune desdites passerelles (GW1,GW2,GW3,GW4) de connexion étant apte à transmettre une liste de stockage disponible, la liste de stockage disponible comportant des données de capacité de stockage en fonction de plage horaire de disponibilité de stockage,
ledit procédé d'optimisation comprenant, lorsque l'objet connecté source (IoT1) initie une procédure de communication avec l'objet connecté destinataire (IoT2) :
- Une procédure (200) de découverte, comportant la réception par l'objet connecté source (IoT1) pour chaque passerelle accessible d'un message d'information (231,232) comportant la liste de stockage disponible ;
- Une procédure de sélection (500) de passerelle de connexion, par l'objet connecté source (IoT1), comportant la sélection d'une passerelle de réception (GW3), ladite passerelle de réception, présentant des données de plage horaire de disponibilité de stockage correspondant à la plage horaire de connexion prédéterminée de l'objet connecté source (IoT1) ;
- Une procédure d'envoi (600) d'un message de requête (Q1) par l'objet connecté source (IoT1) destiné à l'objet connecté destinataire (loT2), ledit message de requête (Q1) comportant un identifiant de la passerelle de réception sélectionnée ;
- Une procédure d'enregistrement (700) d'un message de réponse (R1) provenant de l'objet connecté destinataire (IoT2), par la passerelle de réception (GW3), comportant l'enregistrement du message de réponse (R1) sur un moyen de stockage ;
- Une procédure de livraison (800) du message de réponse (R1), par la passerelle de réception (GW3), comportant la transmission du message de réponse à l'objet connecté source (loT1) durant la plage horaire de connexion prédéterminée.

2. Procédé (1) d'optimisation selon la revendication 1, **caractérisé en ce que** la liste de stockage disponible du message d'information (231,232) comporte des données de capacité de stockage en fonction de plage horaire de disponibilité de stockage sur les moyens de stockage de la passerelle de connexion et sur les moyens de stockage d'objets connectés (loT) appartenant au réseau (11,12,13) de ladite passerelle de connexion.

3. Procédé (1) d'optimisation selon la revendication 1 ou 2, **caractérisé en ce que** la procédure d'enregistrement (700) du message de réponse (R1) comprend le stockage du message de réponse (R1) sur un moyen de stockage de la passerelle de réception ou sur un moyen de stockage d'un objet connecté (loT) appartenant au réseau (11,12,13) de ladite passerelle de réception.

4. Procédé (1) d'optimisation selon l'une des revendications précédentes, **caractérisé en ce qu'**il comprend une étape d'attribution (300) de niveau de priorité, à chaque passerelle (GW1,GW2,GW3) de connexion de la pluralité de passerelles, ladite attribution (300) de niveau de priorité comprenant l'exécution (301,302,303) par l'objet connecté source (IoT1) d'au moins une fonction de priorisation (F1,F2) pour calculer des niveaux de priorité pour chaque passerelle de connexion.

5. Procédé (1) d'optimisation selon la revendication 4, **caractérisé en ce que** la procédure d'attribution (300) de niveau de priorité comporte l'attribution, pour chaque passerelle de connexion, d'un niveau de priorité par catégorie de message.

6. Procédé (1) d'optimisation selon l'une des revendications 4 ou 5, **caractérisé en ce qu'**il comprend une procédure (400) de catégorisation de messages à transmettre, comportant une catégorisation (410) d'une requête (Q1) à envoyer par l'objet connecté source (IoT1) de façon à définir une valeur de catégorie (C1) de la requête (Q1), la catégorisation (410) comprenant l'exécution par l'objet connecté source (IoT1) d'au moins une fonction de catégorisation (f), pour calculer la valeur de catégorie de la requête (Q1) à partir de paramètres de message de ladite requête.

7. Procédé (1) d'optimisation selon l'une quelconque des revendications 4 à 6, **caractérisé en ce que** la procédure (500) de sélection comprend la sélection d'une passerelle de réception selon les niveaux de priorité calculés lorsque plusieurs passerelles de connexion disposent d'une plage horaire de disponibilité de stockage correspondant à la plage horaire de connexion prédéterminée de l'objet connecté source.

8. Procédé (1) d'optimisation selon l'une quelconque des revendications 4 à 7, **caractérisé en ce que** la procédure (500) de sélection comprend la sélection d'une passerelle d'envoi selon les niveaux de priorité calculés.

9. Procédé (1) d'optimisation selon l'une des revendications précédentes, **caractérisé en ce que** la procédure (700) d'enregistrement du message de réponse (R1) comprend une étape de chiffrement (710) du message de réponse avant l'enregistrement du message de réponse sur un moyen de stockage.

10. Procédé (1) d'optimisation selon l'une des revendications précédentes, **caractérisé en ce que** la requête (Q1) transmise peut également comporter une indication temporelle correspondant à une période durant laquelle la réponse (R1) doit être transmise.

11. Procédé (1) d'optimisation selon l'une des revendications précédentes, **caractérisé en ce que** le procédé comprend en outre une étape de mise à jour des listes de stockages disponibles, et une étape de mise à jour des niveaux de priorités.

12. Procédé (1) d'optimisation selon l'une des revendications précédentes, **caractérisé en ce que** le message d'information (231,232) comprend les paramètres de connectivité des passerelles, une valeur de durée de validité (V1,V2,V3) desdits paramètres de connectivité, la liste de stockage disponible mise à jour pour chaque passerelle (GW1,GW2,GW3) de connexion accessible.

13. Objet (IoT1) connecté adapté pour être connecté à plusieurs sous-réseaux comprenant une pluralité de passerelle (GW1,GW2,GW3,GW4) de connexion à des sous réseaux (11,12,13,14) de transport de données pouvant présenter des normes de communication différentes, ledit objet connecté (IoT1) étant apte à communiquer avec au moins un deuxième objet connecté (loT2), ledit objet connecté étant apte à mettre en œuvre un procédé (1) d'optimisation d'échanges de données selon l'une des revendications 1 à 12.

14. Passerelle de connexion pour l'optimisation d'échanges de données dans une infrastructure d'objets connectés (IoT1,IoT2) comportant une pluralité de passerelles (GW1,GW2,GW3,GW4) de connexion à des sous réseaux (11,12,13,14) de transport de données pouvant présenter des normes de communication différentes, ladite infrastructure d'objets connectés comprenant au moins un objet connecté source (IoT1) et un objet connecté destinataire (loT2) chacun étant aptes à accéder à au moins une passerelle de la pluralité de passerelles de connexion, ladite passerelle de connexion étant apte à mettre en œuvre un procédé (1) d'optimisation selon l'une des revendications 1 à 12.

15. Produit programme d'ordinateur pour l'optimisation d'échanges de données dans une infrastructure d'objets connectés, qui comprend des instructions qui, lorsque le programme est exécuté par un ordinateur, conduisent celui-ci à mettre en œuvre les étapes d'un procédé (1) d'optimisation d'échanges de données selon l'une des revendications 1 à 12
